# EUROPEAN PATENT APPLICATION

(11) **EP 3 492 510 A1**
(43) Date of publication of application: **05.06.2019**
(21) Application number: 17833990.9
(22) Date of filing: 06.07.2017
(51) Int. Cl.: C08G 63/19, B32B 27/38

(54) **POLYMER, COMPOSITION, MOLDED ARTICLE, CURED PRODUCT, AND LAMINATE**

(30) Priority: 28.07.2016 JP 2016148943
(71) Applicant: JSR Corporation, Minato-ku Tokyo 105-8640 (JP)
(72) Inventor: ANABUKI, Shouma, Tokyo 105-8640 (JP); HIFUMI, Ryouyuu, Tokyo 105-8640 (JP); KADOTA, Toshiaki, Tokyo 105-8640 (JP); TATARA, Ryouji, Tokyo 105-8640 (JP); MIYAKI, Nobuyuki, Tokyo 105-8640 (JP)
(74) Representative: TBK
(86) International application number: PCT/JP2017/024866
(87) International publication number: WO 2018/020981

(57) **Abstract**

Provided are a novel polymer that has a high glass transition temperature, and is excellent in solubility in various organic solvents, heat resistance, and mechanical characteristics, and a composition, a molded body, a cured product, and a laminate each using the polymer. The polymer according to the present invention includes: a first structural unit represented by the formula (1); a second structural unit represented by at least one of the formulae (2-1) and (2-2); and a third structural unit represented by at least one of the formulae (3-1) and (3-2).

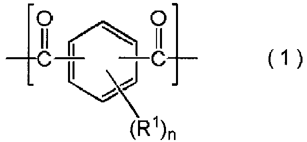

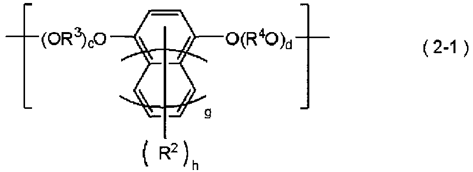

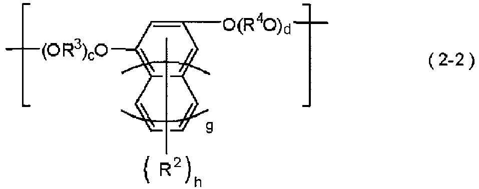

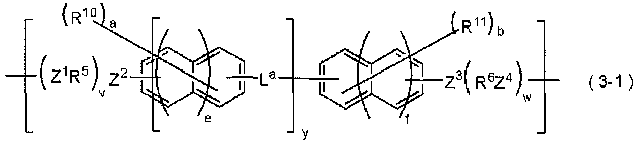

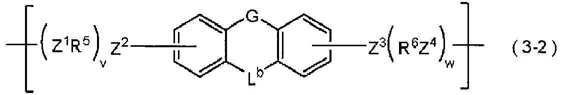

## Description

### Technical Field

The present invention relates to a novel polymer, a novel composition, a novel molded body, a novel cured product, and a novel laminate. More specifically, the present invention relates to a novel polymer that has a high glass transition temperature, and is excellent in solubility in various organic solvents, heat resistance, and mechanical characteristics, and to a composition, a molded body, a cured product, and a laminate each using the polymer.

### Background Art

A polymer obtained by copolymerizing a dihydric phenol-based monomer and an aromatic dicarboxylic acid-based monomer (polyarylate resin) has been widely used in, for example, electrical, automotive, and mechanical fields because of its high heat resistance and high transparency. In general, in those fields, a composition is prepared by dissolving the polymer in a solvent, and then a molded body, such as a film, is molded out of the composition and applied to various applications.

For example, a polyarylate resin including a bisphenol, such as 1,1-bis(4-hydroxyphenyl)-3,3,5-trimethylcyclohexane, another bisphenol, such as 2,2-bis(4-hydroxyphenyl)propane, and an aromatic dicarboxylic acid has been proposed as a specific polyarylate resin and a production method therefor (see Patent Literatures 1 and 2).

In addition, for example, a polyarylate resin including a dihydric phenol component, such as 1,1-bis(4-hydroxyphenyl)-3,3,5-trimethylcyclohexane, and an aromatic dicarboxylic acid component has been proposed (see Patent Literature 3).

Further, for example, a method of producing a polymer using an aromatic dicarboxylic acid (isophthalic acid), hydroquinone, phenol, a diaryl carbonate, and a dihydroxy compound, such as 2,2-bis(4-hydroxyphenyl)propane, has been proposed (see Patent Literature 4).

### Citation List

### Patent Literature

[PTL 1] JP 2011-68798 A
[PTL 2] JP 2009-167291 A
[PTL3] JP 2013-173928 A
[PTL 4] JP 06-306152 A

### Summary of Invention

### Technical Problem

At present, however, a related-art polyarylate resin still has room for improvement, and hence further improvements thereof in solubility in various organic solvents, heat resistance, and mechanical characteristics have been required.

The present invention has been made in view of the above-mentioned actual circumstances, and an object of the present invention is to provide a novel polymer that has a high glass transition temperature, and is excellent in solubility in various organic solvents, heat resistance, and mechanical characteristics, and a composition, a molded body, a cured product, and a laminate each using the polymer.

### Solution to Problem

The present invention has been made to solve at least some of the above-mentioned problems, and can be achieved as the following embodiments or application examples.

### [Application Example 1]

According to one embodiment of the present invention, there is provided a polymer, including:
a first structural unit represented by the following formula (1);
a second structural unit represented by at least one of the following formulae (2-1) and (2-2); and
a third structural unit represented by at least one of the following formulae (3-1) and (3-2): 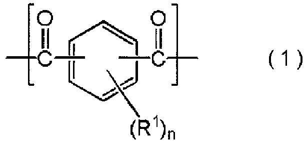 in the formula (1), R¹ represents a halogen atom, a monovalent hydrocarbon group having 1 to 20 carbon atoms, a monovalent halogenated hydrocarbon group having 1 to 20 carbon atoms, a nitro group, or a cyano group, and "n" represents an integer of from 0 to 4, and when "n" represents 2 or more, a plurality of R¹s may be identical to or different from each other, or may be bonded to each other in an arbitrary combination to form part of a ring structure; 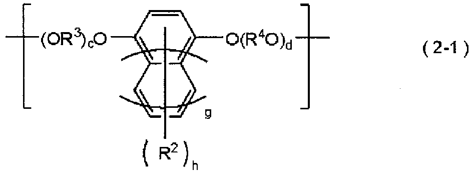 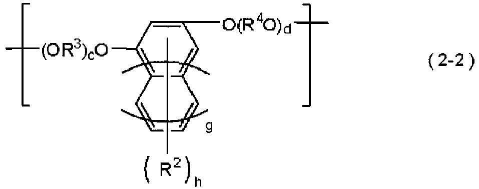 in the formulae (2-1) and (2-2), R²s each independently represent a halogen atom, a monovalent hydrocarbon group having 1 to 20 carbon atoms, a monovalent halogenated hydrocarbon group having 1 to 20 carbon atoms, a nitro group, or a cyano group, "g"s each independently represent an integer of from 0 to 2, "h"s each independently represent an integer of from 1 to 8, and when "h" represents 2 or more, a plurality of R²s may be identical to or different from each other, or may be bonded to each other in an arbitrary combination to form part of a ring structure, R³s each independently represent a methylene group or an alkylene group having 2 to 4 carbon atoms, "c" represents an integer of from 0 to 2, and when "c" represents 2, two R³s may be identical to or different from each other, R⁴s each independently represent a methylene group or an alkylene group having 2 to 4 carbon atoms, and "d" represents an integer of from 0 to 2, and when "d" represents 2, two R⁴s may be identical to or different from each other; 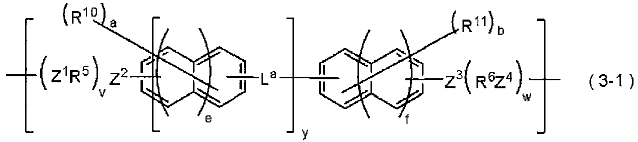 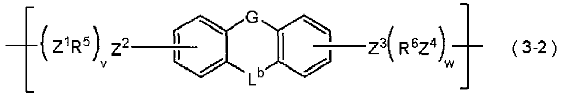 in the formulae (3-1) and (3-2), R¹⁰ and R¹¹ each independently represent a halogen atom, a monovalent hydrocarbon group having 1 to 20 carbon atoms, a monovalent halogenated hydrocarbon group having 1 to 20 carbon atoms, a nitro group, or a cyano group, "e" and "f" each independently represent an integer of from 0 to 2, "a" and "b" each independently represent an integer of from 0 to 8, when "a" represents 2 or more, a plurality of R¹⁰s may be identical to or different from each other, or may be bonded to each other in an arbitrary combination to form part of a ring structure, and when "b" represents 2 or more, a plurality of R¹¹s may be identical to or different from each other, or may be bonded to each other in an arbitrary combination to form part of a ring structure, Z¹ to Z⁴ each independently represent -O- or -S-, R⁵ and R⁶ each independently represent a methylene group or an alkylene group having 2 to 4 carbon atoms, "v" represents an integer of from 0 to 2, and when "v" represents 2, two R⁵s may be identical to or different from each other, and two Z¹s may be identical to or different from each other, "w" represents an integer of from 0 to 2, and when "w" represents 2, two R⁶s may be identical to or different from each other, and two Z⁴s may be identical to or different from each other, L^{a} represents a divalent group represented by the following formula (L-1), (L-2), (L-3-1), or (L-3-2), "y" represents an integer of from 1 to 3, when "y" represents 2 or more, a plurality of L^{a}s may be identical to or different from each other, and when "y" represents 2 or more, and "a" represents 1 or more, a plurality of R¹⁰s may be identical to or different from each other, L^{b} represents a divalent group represented by the following formula (L-3-1) or (L-3-2), and G represents -O-, -S-, -C=O-, -SO-, or -SO₂-; 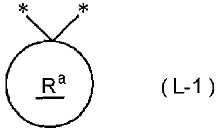 in the formula (L-1), R^{a} represents a divalent alicyclic hydrocarbon group having 5 to 30 ring members, or a divalent fluorinated alicyclic hydrocarbon group having 5 to 30 ring members, and "*" represents a bonding site; 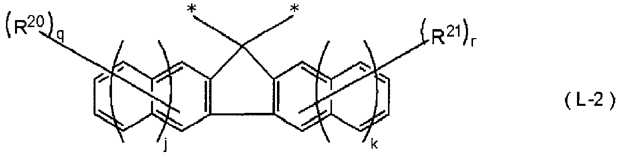 in the formula (L-2), R²⁰ and R²¹ each independently represent a halogen atom, a monovalent hydrocarbon group having 1 to 20 carbon atoms, a monovalent halogenated hydrocarbon group having 1 to 20 carbon atoms, a nitro group, or a cyano group, "j" and "k" each independently represent an integer of from 0 to 2, "q" and "r" each independently represent an integer of from 0 to 8, when "q" represents 2 or more, a plurality of R²⁰s may be identical to or different from each other, or may be bonded to each other in an arbitrary combination to form part of a ring structure, and when "r" represents 2 or more, a plurality of R²¹s may be identical to or different from each other, or may be bonded to each other in an arbitrary combination to form part of a ring structure, and "*" represents a bonding site; 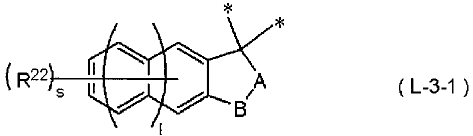 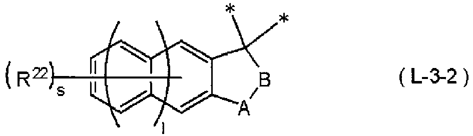 in the formulae (L-3-1) and (L-3-2), As each independently represent -CO-, -SO-, or -SO₂-, Bs each independently represent -O-, -S-, or -N(R³⁰)-, R³⁰ represents a hydrogen atom, a halogen atom, a monovalent hydrocarbon group having 1 to 20 carbon atoms, or a monovalent halogenated hydrocarbon group having 1 to 20 carbon atoms, R²²s each independently represent a halogen atom, a monovalent hydrocarbon group having 1 to 20 carbon atoms, a monovalent halogenated hydrocarbon group having 1 to 20 carbon atoms, a nitro group, or a cyano group, "1"s each independently represent an integer of from 0 to 2, "s"s each independently represent an integer of from 0 to 8, and when "s" represents 2 or more, a plurality of R²²s may be identical to or different from each other, or may be bonded to each other in an arbitrary combination to form part of a ring structure, and "*" represents a bonding site.

### [Application Example 2]

In the polymer according to Application Example 1,
the polymer may include a unit represented by the formula (3-1) as the third structural unit,
L^{a} in the formula (3-1) may represent a divalent group represented by the formula (L-1), and
R^{a} in the formula (L-1) may represent a monocyclic alicyclic hydrocarbon group having 5 to 15 ring members, or a monocyclic fluorinated alicyclic hydrocarbon group having 5 to 15 ring members.

### [Application Example 3]

In the polymer according to Application Example 1,
the polymer may include a unit represented by the formula (3-1) as the third structural unit,
L^{a} in the formula (3-1) may represent a divalent group represented by the formula (L-1), and
R^{a} in the formula (L-1) may represent a polycyclic alicyclic hydrocarbon group having 7 to 30 ring members, or a polycyclic fluorinated alicyclic hydrocarbon group having 7 to 30 ring members.

### [Application Example 4]

In the polymer according to any one of Application Example 1 to Application Example 3, the polymer may have a weight-average molecular weight in terms of polystyrene of 500 or more and 400,000 or less.

### [Application Example 5]

According to one embodiment of the present invention, there is provided a composition, including:
the polymer of any one of Application Example 1 to Application Example 4; and
an organic solvent.

### [Application Example 6]

According to one embodiment of the present invention, there is provided a molded body, including the polymer of any one of Application Example 1 to Application Example 4.

### [Application Example 7]

According to one embodiment of the present invention, there is provided a composition, including:
a polymer including a first structural unit represented by the following formula (1), a second structural unit represented by the following formula (2), and a third structural unit represented by at least one of the following formulae (3-1) and (3-2); and
a curable compound: 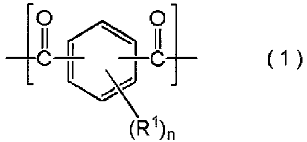 in the formula (1), R¹ represents a halogen atom, a monovalent hydrocarbon group having 1 to 20 carbon atoms, a monovalent halogenated hydrocarbon group having 1 to 20 carbon atoms, a nitro group, or a cyano group, and "n" represents an integer of from 0 to 4, and when "n" represents 2 or more, a plurality of R¹s may be identical to or different from each other, or may be bonded to each other in an arbitrary combination to form part of a ring structure; 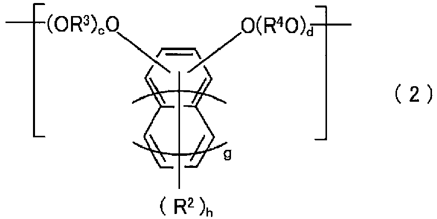 in the formula (2), R² represents a halogen atom, a monovalent hydrocarbon group having 1 to 20 carbon atoms, a monovalent halogenated hydrocarbon group having 1 to 20 carbon atoms, a nitro group, or a cyano group, "g" represents an integer of from 0 to 2, "h" represents an integer of from 0 to 8, and when "h" represents 2 or more, a plurality of R²s may be identical to or different from each other, or may be bonded to each other in an arbitrary combination to form part of a ring structure, R³ represents a methylene group or an alkylene group having 2 to 4 carbon atoms, "c" represents an integer of from 0 to 2, and when "c" represents 2, two R³s may be identical to or different from each other, R⁴ represents a methylene group or an alkylene group having 2 to 4 carbon atoms, and "d" represents an integer of from 0 to 2, and when "d" represents 2, two R⁴s may be identical to or different from each other; 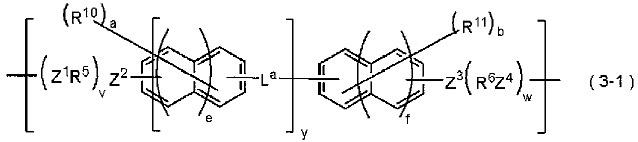 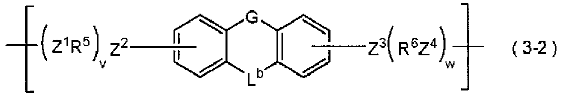 in the formulae (3-1) and (3-2), R¹⁰ and R¹¹ each independently represent a halogen atom, a monovalent hydrocarbon group having 1 to 20 carbon atoms, a monovalent halogenated hydrocarbon group having 1 to 20 carbon atoms, a nitro group, or a cyano group, "e" and "f' each independently represent an integer of from 0 to 2, "a" and "b" each independently represent an integer of from 0 to 8, when "a" represents 2 or more, a plurality of R¹⁰s may be identical to or different from each other, or may be bonded to each other in an arbitrary combination to form part of a ring structure, and when "b" represents 2 or more, a plurality of R¹¹s may be identical to or different from each other, or may be bonded to each other in an arbitrary combination to form part of a ring structure, Z¹ to Z⁴ each independently represent -O- or -S-, R⁵ and R⁶ each independently represent a methylene group or an alkylene group having 2 to 4 carbon atoms, "v" represents an integer of from 0 to 2, and when "v" represents 2, two R⁵s may be identical to or different from each other, and two Z¹s may be identical to or different from each other, "w" represents an integer of from 0 to 2, and when "w" represents 2, two R⁶s may be identical to or different from each other, and two Z⁴s may be identical to or different from each other, L^{a} represents a divalent group represented by the following formula (L-1), (L-2), (L-3-1), or (L-3-2), "y" represents an integer of from 1 to 3, when "y" represents 2 or more, a plurality of L^{a}s may be identical to or different from each other, and when "y" represents 2 or more, and "a" represents 1 or more, a plurality of R¹⁰s may be identical to or different from each other, L^{b} represents a divalent group represented by the following formula (L-3-1) or (L-3-2), and G represents -O-, -S-, -C=O-, -SO-, or -SO₂-; 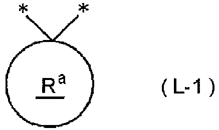 in the formula (L-1), R^{a} represents a divalent alicyclic hydrocarbon group having 5 to 30 ring members, or a divalent fluorinated alicyclic hydrocarbon group having 5 to 30 ring members, and "*" represents a bonding site; 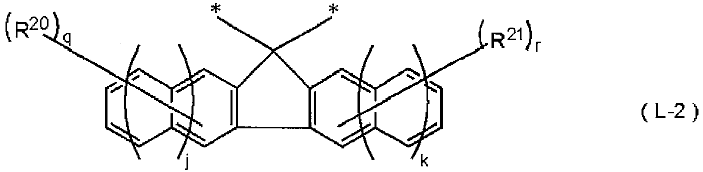 in the formula (L-2), R²⁰ and R²¹ each independently represent a halogen atom, a monovalent hydrocarbon group having 1 to 20 carbon atoms, a monovalent halogenated hydrocarbon group having 1 to 20 carbon atoms, a nitro group, or a cyano group, "j" and "k" each independently represent an integer of from 0 to 2, "q" and "r" each independently represent an integer of from 0 to 8, when "q" represents 2 or more, a plurality of R²⁰s may be identical to or different from each other, or may be bonded to each other in an arbitrary combination to form part of a ring structure, and when "r" represents 2 or more, a plurality of R²¹s may be identical to or different from each other, or may be bonded to each other in an arbitrary combination to form part of a ring structure, and "*" represents a bonding site; 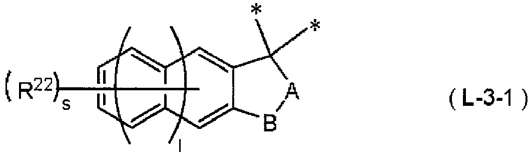 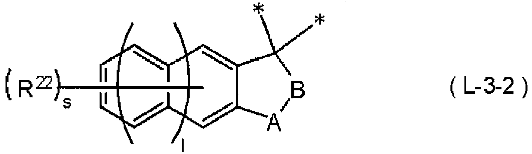 in the formulae (L-3-1) and (L-3-2), As each independently represent -CO-, -SO-, or -SO₂-, Bs each independently represent -O-, -S-, or -N(R³⁰)-, R³⁰ represents a hydrogen atom, a halogen atom, a monovalent hydrocarbon group having 1 to 20 carbon atoms, or a monovalent halogenated hydrocarbon group having 1 to 20 carbon atoms, R²²s each independently represent a halogen atom, a monovalent hydrocarbon group having 1 to 20 carbon atoms, a monovalent halogenated hydrocarbon group having 1 to 20 carbon atoms, a nitro group, or a cyano group, "1"s each independently represent an integer of from 0 to 2, "s"s each independently represent an integer of from 0 to 8, and when "s" represents 2 or more, a plurality of R²²_{S} may be identical to or different from each other, or may be bonded to each other in an arbitrary combination to form part of a ring structure, and "*" represents a bonding site.

### [Application Example 8]

In the composition according to Application Example 7, the curable compound may include at least one kind of an epoxy compound, a cyanate ester compound, a vinyl compound, a silicone compound, an oxazine compound, a maleimide compound, and an allyl compound.

### [Application Example 9]

The composition according to Application Example 7 or Application Example 8 may further include a curing aid.

### [Application Example 10]

According to one embodiment of the present invention, there is provided a cured product, which is obtained by curing the composition of any one of Application Example 7 to Application Example 9.

### [Application Example 11]

According to one embodiment of the present invention, there is provided a laminate, including:
a substrate; and
a cured product layer produced on the substrate by using the composition of any one of Application Example 7 to Application Example 9.

Here, the term "hydrocarbon group" includes a chain hydrocarbon group and a cyclic hydrocarbon group unless otherwise stated. The "hydrocarbon group" may be a saturated hydrocarbon group, or may be an unsaturated hydrocarbon group. The term "chain hydrocarbon group" refers to a hydrocarbon group that is free of any cyclic structure and is formed only of a chain structure, and the term includes both of a linear hydrocarbon group and a branched hydrocarbon group. The term "cyclic hydrocarbon group" refers to a hydrocarbon group including a cyclic structure, and includes both of an alicyclic hydrocarbon group and an aromatic hydrocarbon group. The term "alicyclic hydrocarbon group" refers to a hydrocarbon group that includes only an alicyclic structure as a cyclic structure and is free of any aromatic ring structure, and the term includes both of a monocyclic alicyclic hydrocarbon group and a polycyclic alicyclic hydrocarbon group; provided that the group does not need to be formed only of an alicyclic structure, and may include a chain structure in part thereof. The term "aromatic hydrocarbon group" refers to a hydrocarbon group including an aromatic ring structure as a cyclic structure, and includes both of a monocyclic aromatic hydrocarbon group and a polycyclic aromatic hydrocarbon group; provided that the group does not need to be formed only of an aromatic ring structure, and may include a chain structure or an alicyclic structure in part thereof. The term "ring members" means the number of atoms forming a cyclic structure, and in the case of a polycycle, means the number of atoms forming the polycycle.

### Advantageous Effects of Invention

According to the present invention, there can be provided a novel polymer that has a high glass transition temperature, and is excellent in performance balance among solubility in various organic solvents, heat resistance, and mechanical characteristics, and a composition, a molded body, a cured product, and a laminate each using the polymer. In particular, there can be provided a novel polymer that is excellent in solubility in various organic solvents, has a high glass transition temperature, is excellent in heat resistance, and has excellent mechanical characteristics (an elastic modulus and a tensile elongation), and a composition, a molded body, a cured product, and a laminate each using the polymer.

### Description of Embodiments

A polymer, a composition, a molded body, a cured product, and a laminate of the present invention are described in detail below.

### <Polymer>

The polymer of the present invention (hereinafter sometimes referred to as "[A] polymer") is a polymer including the first structural unit, the second structural unit, and the third structural unit. The [A] polymer may include two or more kinds of each of the structural units. The arrangement of the respective structural units of the [A] polymer and any other structure thereof are not particularly limited as long as the polymer includes the first, second, and third structural units. For example, the [A] polymer may include a structural unit other than the first to third structural units. In addition, as described later, the [A] polymer may include a repeating unit including the first and second structural units, and a repeating unit including the first and third structural units, and may further include any other repeating unit.

The [A] polymer can be improved in solubility in various organic solvents, heat resistance, and mechanical characteristics because the polymer includes the first, second, and third structural units. Although a reason why the above-mentioned effects are exhibited when the [A] polymer has the above-mentioned construction is unclear, the exhibition is assumed to be mainly because of the following reasons (1) to (3):
(1) when the second structural unit derived from a meta- or para-binding dihydroxybenzene-based monomer is incorporated, the main chain of the polymer is easily oriented to reduce a sectional area occupied by the polymer chain, and hence the mechanical characteristics can be improved;
(2) in addition, the incorporation of the second structural unit as described above can improve the solubility in various organic solvents because the unit has a bulky substituent; and
(3) when the third structural unit in which aromatic rings are linked to each other through a relatively bulky ring structure is incorporated, the rigidity of the polymer chain and the solubility in various organic solvents can be moderately adjusted, and hence the heat resistance can be improved.

The first, second, and third structural units, any other structural unit that the [A] polymer may arbitrarily include, and the like are described below.

### [First Structural Unit]

The first structural unit in the [A] polymer is represented by the following formula (1): 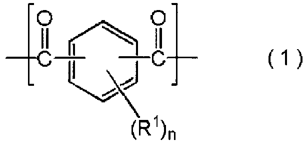 in the formula (1), R¹ represents a halogen atom, a monovalent hydrocarbon group having 1 to 20 carbon atoms, a monovalent halogenated hydrocarbon group having 1 to 20 carbon atoms, a nitro group, or a cyano group, and "n" represents an integer of from 0 to 4, and when "n" represents 2 or more, a plurality of R¹s may be identical to or different from each other, or may be bonded to each other in an arbitrary combination to form part of a ring structure.

Examples of the halogen atom represented by R¹ include a fluorine atom, a chlorine atom, a bromine atom, and an iodine atom.

Examples of the monovalent hydrocarbon group having 1 to 20 carbon atoms represented by R¹ include a monovalent chain hydrocarbon group, a monovalent alicyclic hydrocarbon group, and a monovalent aromatic hydrocarbon group.

Examples of the monovalent chain hydrocarbon group include: alkyl groups, such as a methyl group, an ethyl group, a n-propyl group, an i-propyl group, a n-butyl group, an i-butyl group, a sec-butyl group, a t-butyl group, and a n-pentyl group; alkenyl groups, such as an ethenyl group, a propenyl group, a butenyl group, and a pentenyl group; and alkynyl groups, such as an ethynyl group, a propynyl group, a butynyl group, and a pentynyl group.

Examples of the monovalent alicyclic hydrocarbon group include: monocyclic cycloalkyl groups, such as a cyclopropyl group, a cyclobutyl group, a cyclopentyl group, and a cyclohexyl group; polycyclic cycloalkyl groups, such as a norbornyl group and an adamantyl group; monocyclic cycloalkenyl groups, such as a cyclopropenyl group, a cyclobutenyl group, a cyclopentenyl group, and a cyclohexenyl group; and polycyclic cycloalkenyl groups, such as a norbornenyl group.

Examples of the monovalent aromatic hydrocarbon group include: aryl groups, such as a phenyl group, a tolyl group, a xylyl group, a naphthyl group, and an anthryl group; and aralkyl groups, such as a benzyl group, a phenethyl group, a phenylpropyl group, and a naphthylmethyl group.

Examples of the monovalent halogenated hydrocarbon group having 1 to 20 carbon atoms represented by R¹ include groups each obtained by substituting part or all of the hydrogen atoms of the monovalent hydrocarbon group having 1 to 20 carbon atoms given as an example of the group represented by R¹ with a halogen atom, such as a fluorine atom, a chlorine atom, a bromine atom, or an iodine atom.

From the viewpoint of an improvement in polymerization reactivity of a monomer that provides the first structural unit, R¹ preferably represents a halogen atom, a monovalent hydrocarbon group having 1 to 6 carbon atoms, a monovalent halogenated hydrocarbon group having 1 to 6 carbon atoms, a nitro group, or a cyano group, and more preferably represents a fluorine atom, a chlorine atom, a methyl group, a nitro group, or a cyano group. From the same viewpoint, "n" preferably represents 0 or 1, and more preferably represents 0.

The position of one bonding site of the first structural unit relative to the other bonding site thereof is not particularly limited, and may be any one of an ortho position, a meta position, and a para position. In particular, from the viewpoint of an improvement in polymerization reactivity of the monomer that provides the first structural unit, the meta position or the para position is preferred.

In addition, examples of the monomer that provides the first structural unit in the [A] polymer include terephthaloyl chloride, isophthaloyl chloride, and phthaloyl chloride. Those monomers may be used alone or in combination thereof.

The lower limit of the content of the first structural unit in the [A] polymer is preferably 10 mol%, more preferably 15 mol%, still more preferably 20 mol% when the total of the first, second, and third structural units in the [A] polymer is defined as 100 mol%. In addition, the upper limit of the content is preferably 95 mol%, more preferably 90 mol%, still more preferably 85 mol%. When the content is set within the range, the solubility of the polymer in an organic solvent, the glass transition temperature thereof, and the fluidity thereof at the time of its molding can be more moderately adjusted.

### [Second Structural Unit]

The second structural unit in the [A] polymer is represented by the following formula (2): 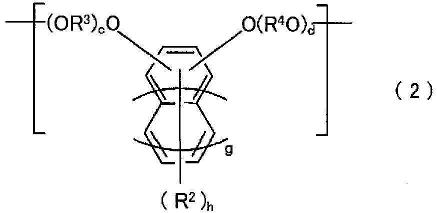 in the formula (2), R² represents a halogen atom, a monovalent hydrocarbon group having 1 to 20 carbon atoms, a monovalent halogenated hydrocarbon group having 1 to 20 carbon atoms, a nitro group, or a cyano group, "g" represents an integer of from 0 to 2, "h" represents an integer of from 0 to 8, and when "h" represents 2 or more, a plurality of R²s may be identical to or different from each other, or may be bonded to each other in an arbitrary combination to form part of a ring structure, R³ represents a methylene group or an alkylene group having 2 to 4 carbon atoms, "c" represents an integer of from 0 to 2, and when "c" represents 2, two R³s may be identical to or different from each other, R⁴ represents a methylene group or an alkylene group having 2 to 4 carbon atoms, and "d" represents an integer of from 0 to 2, and when "d" represents 2, two R⁴s may be identical to or different from each other.

Examples of the halogen atom represented by R² include the halogen atoms given as the examples of the halogen atom represented by R¹ in the formula (1).

The monovalent hydrocarbon group having 1 to 20 carbon atoms represented by R² is, for example, the monovalent hydrocarbon group having 1 to 20 carbon atoms represented by R¹ in the formula (1).

The monovalent halogenated hydrocarbon group having 1 to 20 carbon atoms represented by R² is, for example, the monovalent halogenated hydrocarbon group having 1 to 20 carbon atoms represented by R¹ in the formula (1).

R² preferably represents a monovalent hydrocarbon group having 1 to 10 carbon atoms, more preferably represents a monovalent chain hydrocarbon group having 1 to 10 carbon atoms, still more preferably represents a monovalent branched hydrocarbon group having 1 to 10 carbon atoms, and particularly preferably represents an i-butyl group, a sec-butyl group, or a t-butyl group. When R² represents any one of the specific groups, the solubility in various organic solvents can be further improved.

From the viewpoint of an improvement in polymerization reactivity of a monomer that provides the second structural unit, "g" preferably represents 0 or 1, and more preferably represents 0.

From the viewpoint of a further improvement of the solubility in various organic solvents, "h" preferably represents from 1 to 8, more preferably represents from 1 to 4, and particularly preferably represents from 1 or 2.

Examples of the alkylene group having 2 to 4 carbon atoms represented by each of R³ and R⁴ include an ethylene group, a n-propylene group, an isopropylene group, a n-butylene group, a sec-butylene group, and a t-butylene group.

From the viewpoint of an improvement in polymerization reactivity of the monomer that provides the second structural unit, R³ preferably represents a methylene group or an ethylene group. From the same viewpoint, "c" preferably represents 0 or 1, and more preferably represents 0.

From the viewpoint of an improvement in polymerization reactivity of the monomer that provides the second structural unit, R⁴ preferably represents a methylene group or an ethylene group. From the same viewpoint, "d" preferably represents 0 or 1, and more preferably represents 0.

The second structural unit in the [A] polymer is preferably a structure represented by at least one of the following formulae (2-1) and (2-2): 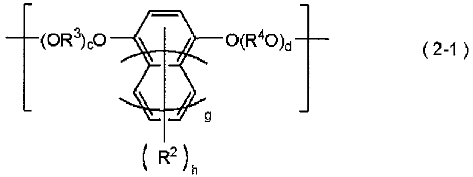 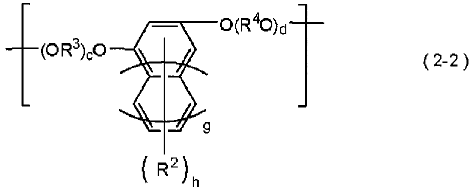 in the formulae (2-1) and (2-2), R²s each independently represent a halogen atom, a monovalent hydrocarbon group having 1 to 20 carbon atoms, a monovalent halogenated hydrocarbon group having 1 to 20 carbon atoms, a nitro group, or a cyano group, "g"s each independently represent an integer of from 0 to 2, "h"s each independently represent an integer of from 1 to 8, and when "h" represents 2 or more, a plurality of R²s may be identical to or different from each other, or may be bonded to each other in an arbitrary combination to form part of a ring structure, R³s each independently represent a methylene group or an alkylene group having 2 to 4 carbon atoms, "c" represents an integer of from 0 to 2, and when "c" represents 2, two R³s may be identical to or different from each other, R⁴s each independently represent a methylene group or an alkylene group having 2 to 4 carbon atoms, and "d" represents an integer of from 0 to 2, and when "d" represents 2, two R⁴s may be identical to or different from each other.

In the formulae (2-1) and (2-2), R², R³, R⁴, "c", "d", "g", and "h" have the same meanings as those in the formula (2), and hence the description for the formula (2) can be applied as it is.

Examples of the monomer that provides the second structural unit in the [A] polymer include 1,4-dihydroxybenzene, methylhydroquinone, 2,6-dimethylhydroquinone, 2,3-dimethylhydroquinone, 2,3,5-trimethylhydroquinone, 2,3,5,6-tetramethylhydroquinone, 3-t-butyl-1,4-dihydroxybenzene, 3,5-di-t-butyl-2,6-dihydroxybenzene, 2,5-di-tert-amylhydroquinone, 2,5-bis(1,1,3,3-tetramethylbutyl)hydroquinone, 2,3-dicyanohydroquinone, 2-methylresorcinol, 4-ethylresorcinol, and 3,5-di-t-butyl-2,6-dihydroxybenzene. Those monomers may be used alone or in combination thereof.

The lower limit of the content of the second structural unit in the [A] polymer is preferably 1 mol%, more preferably 2 mol%, still more preferably 5 mol% when the total of the first, second, and third structural units in the [A] polymer is defined as 100 mol%. In addition, the upper limit of the content is preferably 95 mol%, more preferably 90 mol%, still more preferably 85 mol%. When the content is set within the range, the solubility in various organic solvents and the mechanical characteristics can be further improved.

### [Third Structural Unit]

The third structural unit in the [A] polymer is represented by at least one of the following formulae (3-1) and (3-2): 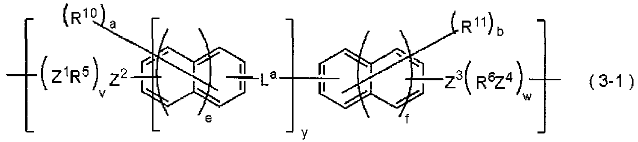 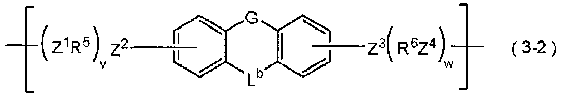 in the formulae (3-1) and (3-2), R¹⁰ and R¹¹ each independently represent a halogen atom, a monovalent hydrocarbon group having 1 to 20 carbon atoms, a monovalent halogenated hydrocarbon group having 1 to 20 carbon atoms, a nitro group, or a cyano group, "e" and "f' each independently represent an integer of from 0 to 2, "a" and "b" each independently represent an integer of from 0 to 8, when "a" represents 2 or more, a plurality of R¹⁰s may be identical to or different from each other, or may be bonded to each other in an arbitrary combination to form part of a ring structure, and when "b" represents 2 or more, a plurality of R¹¹s may be identical to or different from each other, or may be bonded to each other in an arbitrary combination to form part of a ring structure, Z¹ to Z⁴ each independently represent -O- or -S-, R⁵ and R⁶ each independently represent a methylene group or an alkylene group having 2 to 4 carbon atoms, "v" represents an integer of from 0 to 2, and when "v" represents 2, two R⁵s may be identical to or different from each other, and two Z¹s may be identical to or different from each other, "w" represents an integer of from 0 to 2, and when "w" represents 2, two R⁶s may be identical to or different from each other, and two Z⁴s may be identical to or different from each other, L^{a} represents a divalent group represented by the following formula (L-1), (L-2), (L-3-1), or (L-3-2), "y" represents an integer of from 1 to 3, when "y" represents 2 or more, a plurality of L^{a}s may be identical to or different from each other, and when "y" represents 2 or more, and "a" represents 1 or more, a plurality of R¹⁰s may be identical to or different from each other, L^{b} represents a divalent group represented by the following formula (L-3-1) or (L-3-2), and G represents -O-, -S-, -C=O-, -SO-, or -SO₂-; 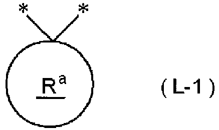 in the formula (L-1), R^{a} represents a divalent alicyclic hydrocarbon group having 5 to 30 ring members, or a divalent fluorinated alicyclic hydrocarbon group having 5 to 30 ring members, and "*" represents a bonding site; 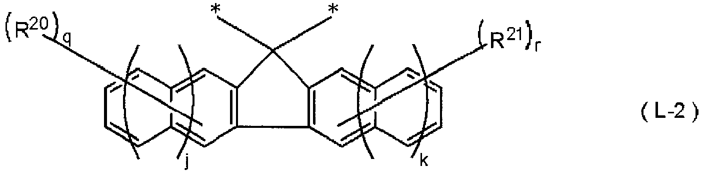 in the formula (L-2), R²⁰ and R²¹ each independently represent a halogen atom, a monovalent hydrocarbon group having 1 to 20 carbon atoms, a monovalent halogenated hydrocarbon group having 1 to 20 carbon atoms, a nitro group, or a cyano group, "j" and "k" each independently represent an integer of from 0 to 2, "q" and "r" each independently represent an integer of from 0 to 8, when "q" represents 2 or more, a plurality of R²⁰s may be identical to or different from each other, or may be bonded to each other in an arbitrary combination to form part of a ring structure, and when "r" represents 2 or more, a plurality of R²¹s may be identical to or different from each other, or may be bonded to each other in an arbitrary combination to form part of a ring structure, and "*" represents a bonding site; 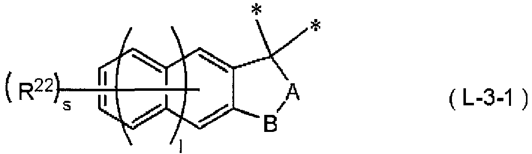 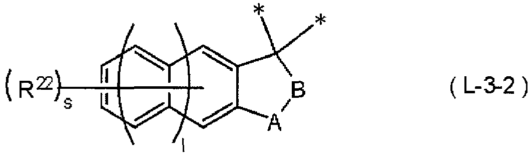 in the formulae (L-3-1) and (L-3-2), As each independently represent -CO-, -SO-, or -SO₂-, Bs each independently represent -O-, -S-, or -N(R³⁰)-, R³⁰ represents a hydrogen atom, a halogen atom, a monovalent hydrocarbon group having 1 to 20 carbon atoms, or a monovalent halogenated hydrocarbon group having 1 to 20 carbon atoms, R²²s each independently represent a halogen atom, a monovalent hydrocarbon group having 1 to 20 carbon atoms, a monovalent halogenated hydrocarbon group having 1 to 20 carbon atoms, a nitro group, or a cyano group, "1"s each independently represent an integer of from 0 to 2, "s"s each independently represent an integer of from 0 to 8, and when "s" represents 2 or more, a plurality of R²²s may be identical to or different from each other, or may be bonded to each other in an arbitrary combination to form part of a ring structure, and "*" represents a bonding site.

Examples of the halogen atom represented by each of R¹⁰ and R¹¹ include the halogen atoms given as the examples of the halogen atom represented by R¹ in the formula (1).

The monovalent hydrocarbon group having 1 to 20 carbon atoms represented by each of R¹⁰ and R¹¹ is, for example, the monovalent hydrocarbon group having 1 to 20 carbon atoms represented by R¹ in the formula (1).

The monovalent halogenated hydrocarbon group having 1 to 20 carbon atoms represented by each of R¹⁰ and R¹¹ is, for example, the monovalent halogenated hydrocarbon group having 1 to 20 carbon atoms represented by R¹ in the formula (1).

From the viewpoint of an improvement in polymerization reactivity of a monomer that provides the third structural unit, each of R¹⁰ and R¹¹ preferably represents a halogen atom, a monovalent hydrocarbon group having 1 to 6 carbon atoms, a monovalent halogenated hydrocarbon group having 1 to 6 carbon atoms, a nitro group, or a cyano group, more preferably represents a fluorine atom, a chlorine atom, a methyl group, a t-butyl group, a phenyl group, a nitro group, or a cyano group, and still more preferably represents a fluorine atom, a methyl group, a t-butyl group, or a phenyl group.

From the viewpoint of an improvement in polymerization reactivity of the monomer that provides the third structural unit, each of "a" and "b" preferably represents 0 or 1, and more preferably represents 0. From the same viewpoint, each of "e" and "f' preferably represents 0 or 1, and more preferably represents 0.

From the viewpoints of the structural stability and polymerization activity of the [A] polymer, Z¹ to Z⁴ each preferably represent -O-.

Examples of the alkylene group having 2 to 4 carbon atoms represented by each of R⁵ and R⁶ include an ethylene group, a n-propylene group, an isopropylene group, a n-butylene group, a sec-butylene group, and a t-butylene group.

From the viewpoint of an improvement in polymerization reactivity of the monomer that provides the third structural unit, R⁵ and R⁶ each preferably represent a methylene group or an ethylene group.

From the viewpoint of an improvement in polymerization reactivity of the monomer that provides the third structural unit, each of "v" and "w" preferably represents 0 or 1, and more preferably represents 0.

From the viewpoint of an improvement in polymerization reactivity of the monomer that provides the third structural unit, "y" preferably represents 1 or 2, and more preferably represents 1.

L^{a} represents a divalent group represented by the formula (L-1), (L-2), (L-3-1), or (L-3-2).

Examples of the divalent alicyclic hydrocarbon group having 5 to 30 ring members represented by R^{a} in the formula (L-1) include a monocyclic alicyclic hydrocarbon group having 5 to 15 ring members, a monocyclic fluorinated alicyclic hydrocarbon group having 5 to 15 ring members, a polycyclic alicyclic hydrocarbon group having 7 to 30 ring members, and a polycyclic fluorinated alicyclic hydrocarbon group having 7 to 30 ring members.

Examples of the monocyclic alicyclic hydrocarbon group having 5 to 15 ring members include a cyclopentane-1,1-diyl group, a cyclohexane-1,1-diyl group, a cyclopentene-3,3-diyl group, a cyclohexene-3,3-diyl group, a cyclooctane-1,1-diyl group, a cyclodecane-1,1-diyl group, a cyclododecane-1,1-diyl group, a 3,3,5-trimethylcyclohexane-l,1-diyl group, and a group obtained by substituting part or all of the hydrogen atoms of each of the groups with a monovalent chain hydrocarbon group having 1 to 20 carbon atoms.

Examples of the monocyclic fluorinated alicyclic hydrocarbon group having 5 to 15 ring members include groups each obtained by substituting part or all of the hydrogen atoms of each of the groups given as the examples of the monocyclic alicyclic hydrocarbon group having 5 to 15 ring members with a fluorine atom.

Examples of the polycyclic alicyclic hydrocarbon group having 7 to 30 ring members include: groups each obtained by removing 2 hydrogen atoms bonded to 1 carbon atom of a polycyclic alicyclic hydrocarbon, such as norbornane, norbornene, adamantane, tricyclo[5.2.1.02,6]decane, tricyclo[5.2.1.02,6]heptane, pinane, camphane, decalin, nortricyclane, perhydroanthracene, perhydroazulene, cyclopentanohydrophenanthrene, or bicyclo[2.2.2]-2-octene; and groups each obtained by substituting part or all of the hydrogen atoms of each of the groups with a monovalent chain hydrocarbon group having 1 to 20 carbon atoms.

Examples of the polycyclic fluorinated alicyclic hydrocarbon group having 7 to 30 ring members include groups each obtained by substituting part or all of the hydrogen atoms of each of the groups given as the examples of the polycyclic alicyclic hydrocarbon group having 7 to 30 ring members with a fluorine atom.

From the viewpoint of a further improvement of the heat resistance, the divalent group represented by the formula (L-1) is preferably a cyclopentane-1,1-diyl group, a cyclohexane-1,1-diyl group, or a group obtained by substituting part or all of the hydrogen atoms of each of the groups with a monovalent chain hydrocarbon group having 1 to 3 carbon atoms, more preferably a cyclohexane-1,1-diyl group or a group obtained by substituting part or all of the hydrogen atoms of a cyclohexane-1,1-diyl group with a monovalent chain hydrocarbon group having 1 to 3 carbon atoms, still more preferably a group obtained by substituting part or all of the hydrogen atoms of a cyclohexane-1,1-diyl group with a methyl group.

Examples of the halogen atom represented by each of R²⁰ and R²¹ in the formula (L-2) include the halogen atoms given as the examples of the halogen atom represented by R¹ in the formula (1).

The monovalent hydrocarbon group having 1 to 20 carbon atoms represented by each of R²⁰ and R²¹ is, for example, the monovalent hydrocarbon group having 1 to 20 carbon atoms represented by R¹ in the formula (1).

The monovalent halogenated hydrocarbon group having 1 to 20 carbon atoms represented by each of R²⁰ and R²¹ is, for example, the monovalent halogenated hydrocarbon group having 1 to 20 carbon atoms represented by R¹ in the formula (1).

From the viewpoint of an improvement in polymerization reactivity of the monomer that provides the third structural unit, each of R²⁰ and R²¹ preferably represents a halogen atom, a monovalent hydrocarbon group having 1 to 3 carbon atoms, a monovalent halogenated hydrocarbon group having 1 to 3 carbon atoms, a nitro group, or a cyano group, more preferably represents a fluorine atom, a chlorine atom, a methyl group, a nitro group, or a cyano group, and still more preferably represents a methyl group.

From the viewpoint of an improvement in polymerization reactivity of the monomer that provides the third structural unit, each of "q" and "r" preferably represents 0 or 1, and more preferably represents 0. From the same viewpoint, each of "j" and "k" preferably represents 0 or 1, and more preferably represents 0.

Examples of the halogen atom represented by R²² in the formulae (L-3-1) and (L-3-2) include the halogen atoms given as the examples of the halogen atom represented by R¹ in the formula (1).

The monovalent hydrocarbon group having 1 to 20 carbon atoms represented by R²² is, for example, the monovalent hydrocarbon group having 1 to 20 carbon atoms represented by R¹ in the formula (1).

The monovalent halogenated hydrocarbon group having 1 to 20 carbon atoms represented by R²² is, for example, the monovalent halogenated hydrocarbon group having 1 to 20 carbon atoms represented by R¹ in the formula (1).

From the viewpoint of an improvement in polymerization reactivity of the monomer that provides the third structural unit, R²² preferably represents a halogen atom, a monovalent hydrocarbon group having 1 to 3 carbon atoms, a monovalent halogenated hydrocarbon group having 1 to 3 carbon atoms, a nitro group, or a cyano group, more preferably represents a fluorine atom, a chlorine atom, a methyl group, a nitro group, or a cyano group, and still more preferably represents a methyl group.

From the viewpoint of an improvement in polymerization reactivity of the monomer that provides the third structural unit, each of "s"s preferably represents 0 or 1, and more preferably represents 0. From the same viewpoint, each of "1"s preferably represents 0 or 1, and more preferably represents 0.

Examples of the halogen atom represented by R³⁰ include the halogen atoms given as the examples of the halogen atom represented by R¹ in the formula (1).

The monovalent hydrocarbon group having 1 to 20 carbon atoms represented by R³⁰ is, for example, the monovalent hydrocarbon group having 1 to 20 carbon atoms represented by R¹ in the formula (1).

The monovalent halogenated hydrocarbon group having 1 to 20 carbon atoms represented by R³⁰ is, for example, the monovalent halogenated hydrocarbon group having 1 to 20 carbon atoms represented by R¹ in the formula (1).

R³⁰ preferably represents a phenyl group from the viewpoint of the heat resistance.

From the viewpoints of the polymerization activity and solubility of the polymer, A in each of the formulae (L-3-1) and (L-3-2) preferably represents -CO- or -SO₂-. From the viewpoints of the polymerization activity and the heat resistance, B in each of the formulae (L-3-1) and (L-3-2) preferably represents -O- or -N(R³⁰)-.

In addition, L^{b} represents a divalent group represented by the formula (L-3-1) or (L-3-2). The description for the formulae (L-3-1) and (L-3-2) in L^{a} can be applied as it is to description for the formulae (L-3-1) and (L-3-2) in L^{b}.

From the viewpoints of the polymerization activity and the heat resistance, G preferably represents -O-.

From the viewpoint of further improving the heat resistance while maintaining the solubility in various organic solvents at a higher level, the third structural unit is preferably a structural unit which has a unit represented by the formula (3-1) and in which L^{a} in the formula (3-1) represents a divalent group represented by the formula (L-1). The unit is particularly preferably a structural unit in which R^{a} in the formula (L-1) represents a monocyclic alicyclic hydrocarbon group having 5 to 15 ring members, or a monocyclic fluorinated alicyclic hydrocarbon group having 5 to 15 ring members, or a structural unit in which R^{a} represents a polycyclic alicyclic hydrocarbon group having 7 to 30 ring members, or a polycyclic fluorinated alicyclic hydrocarbon group having 7 to 30 ring members.

In addition, from the viewpoint of further improving the heat resistance while maintaining the solubility in various organic solvents at a higher level, the third structural unit is preferably a structural unit which has a unit represented by the formula (3-1) and in which L^{a} in the formula (3-1) represents a divalent group represented by the formula (L-3-1) or (L-3-2). The unit is particularly preferably a structural unit in which A in the formula (L-3-1) or (L-3-2) represents -CO- or -SO₂-, and B therein represents -O- or -N(R³⁰)-.

Further, from the viewpoint of further improving the heat resistance while maintaining the solubility in various organic solvents at a higher level, the third structural unit is preferably a structural unit which has a unit represented by the formula (3-2) and in which G represents -O-, A in the formula (L-3-1) or (L-3-2) representing L^{b} represents -CO- or -SO₂-, and B therein represents -O- or -N(R³⁰)-.

In addition, examples of the monomer that provides the third structural unit in the [A] polymer include 1,1-bis(4-hydroxyphenyl)-3,3,5-trimethylcyclohexane, phenolphthalein, o-cresolphthalein, p-xylenolphthalein, thymolphthalein, 3',3",5',5"-tetraiodophenolphthalein, 4,5,6,7-tetrabromophenolphthalein, α-naphtholphthalein, phenolsulfonphthalein, o-cresolsulfonphthalein, Bromophenol Red, Bromophenol Blue, m-Cresol Purple, Chlorophenol Red, Bromochlorophenol Blue, 2-phenyl-3,3'-bis(4-hydroxyphenyl)phthalimidine, 2,3-dihydroxy-3,3-bis(4-hydroxyphenyl)-¹H-isoindol-1-one, 3,3-bis(4-hydroxyphenyl)oxindole, fluorescein, 5-carboxyfluorescein, 6-carboxyfluorescein, 5-aminofluorescein, and 6-aminofluorescein. Those monomers may be used alone or in combination thereof.

The lower limit of the content of the third structural unit in the [A] polymer is preferably 1 mol%, more preferably 2 mol%, still more preferably 5 mol% when the total of the first, second, and third structural units in the [A] polymer is defined as 100 mol%. In addition, the upper limit of the content is preferably 95 mol%, more preferably 90 mol%, still more preferably 85 mol%. When the content is set within the range, the heat resistance and the mechanical characteristics can be further improved.

### [Other Structural Unit]

The [A] polymer may include any other structural unit different from the first, second, and third structural units for the purpose of, for example, adjusting its molecular weight to the extent that the above-mentioned effects are not impaired.

The other structural unit is, for example, a structural unit in which L^{a} in the formula (3-1) represents a single bond, -O-, -S-, -CO-, -SO-, -SO₂-, -CONH-, -COO-, a divalent chain hydrocarbon group having 1 to 20 carbon atoms, a divalent fluorinated chain hydrocarbon group having 1 to 20 carbon atoms, a divalent aromatic hydrocarbon group having 6 to 20 carbon atoms, provided that the respective groups represented by the formulae (L-2), (L-3-1), and (L-3-2) are excluded, or a divalent fluorinated aromatic hydrocarbon group having 6 to 20 carbon atoms, provided that the respective groups represented by the formulae (L-2), (L-3-1), and (L-3-2) are excluded.

When the [A] polymer includes the other structural unit, the lower limit of the content of the other structural unit is preferably 1 mol%, more preferably 5 mol%, still more preferably 10 mol% with respect to all the structural units in the [A] polymer. In addition, the upper limit of the content is preferably 50 mol%, more preferably 45 mol%, still more preferably 40 mol%. When the content is set within the range, the adjustment of the molecular weight and the like can be easily performed to the extent that the above-mentioned effects are not impaired.

### [Arrangement of Respective Structural Units]

As long as the [A] polymer includes the first, second, and third structural units, the arrangement of the respective structural units is not limited. However, from the viewpoints of further improving the solubility in various organic solvents, and further improving the heat resistance and the mechanical characteristics, the polymer preferably includes the first, second, and third structural units in its main chain. The term "main chain" as used herein refers to a bonding chain that is relatively longest in the polymer.

In addition, when the [A] polymer includes the first, second, and third structural units in its main chain, a reduction in birefringence in the case of the application of the [A] polymer to an optical part is facilitated, and hence, for example, an improvement in definition of an image is facilitated. Further, the [A] polymer is excellent in heat resistance and mechanical characteristics, and hence, for example, the heat deterioration of a molded body obtained from the [A] polymer can be suppressed, and high dimensional stability can be imparted thereto.

### [Repeating Unit]

The [A] polymer including the first, second, and third structural units in its main chain is, for example, a polymer including, in its main chain, at least one of a repeating unit represented by the following formula (a-1) and a repeating unit represented by the following formula (a-2), and at least one of a repeating unit represented by the following formula (b-1) and a repeating unit represented by the following formula (b-2).

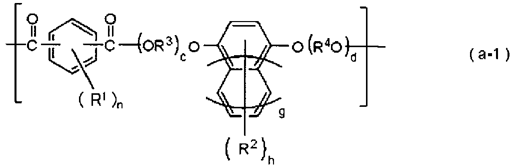

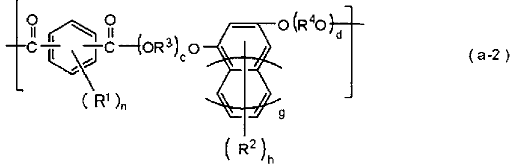

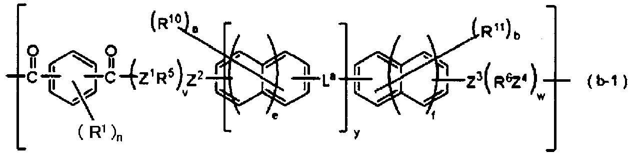

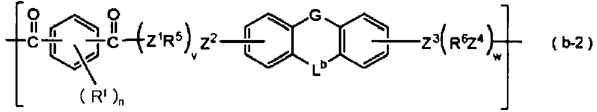

In the formulae (a-1), (a-2), (b-1), and (b-2), R¹ and "n" have the same meanings as those of R¹ and "n" in the formula (1), respectively, R² to R⁴, "c", "d", "g", and "h" have the same meanings as those of R² to R⁴, "c", "d", "g", and "h" in the formulae (2-1) and (2-2), respectively, and R⁵, R⁶, R¹⁰, R¹¹, L^{a}, L^{b}, G, Z¹ to Z⁴, "a", "b", "e", "f, "v", and "w" have the same meanings as those of R⁵, R⁶, R¹⁰, R¹¹, L^{a}, L^{b}, G, Z¹ to Z⁴, "a", "b", "e", "f", "v", and "w" in the formulae (3-1) and (3-2), respectively.

### <Method of synthesizing [A] Polymer>

Although a method of synthesizing the [A] polymer in the present invention is not particularly limited, the polymer may be synthesized by a known poly(thio)ester synthesis method. The polymer may be synthesized by, for example, causing a dicarboxylic acid halide monomer that provides the first structural unit, a diol monomer that provides the second structural unit, a diol monomer or dithiol monomer that provides the third structural unit, and any other compound to react with one another in an organic solvent or at an interface between the organic solvent and water under predetermined conditions.

Examples of the other compound include an alkali metal compound, an end terminator, a phase-transfer catalyst, and a monomer that provides the above-mentioned other structural unit.

The alkali metal compound reacts with the diol monomer or the like to form an alkali metal salt in the process of the synthesis of the [A] polymer. Examples of such alkali metal compound include: alkali metal hydrides, such as lithium hydride, sodium hydride, and potassium hydride; alkali metal hydroxides, such as lithium hydroxide, sodium hydroxide, and potassium hydroxide; alkali metal carbonates, such as lithium carbonate, sodium carbonate, and potassium carbonate; and alkali metal hydrogen carbonates, such as lithium hydrogen carbonate, sodium hydrogen carbonate, and potassium hydrogen carbonate. Of those, alkali metal hydroxides and alkali metal carbonates are preferred, and sodium hydroxide and potassium carbonate are more preferred.

When the alkali metal compound is used, the lower limit of its usage amount is preferably 1.01 times equivalent, more preferably 1.03 times equivalent, still more preferably 1.05 times equivalent in terms of the amount of a metal atom in the alkali metal compound with respect to the hydroxy groups of all the monomers to be used in the synthesis of the [A] polymer. Meanwhile, the upper limit of the usage amount is preferably 1.1 times equivalent, more preferably 1.07 times equivalent.

Examples of the organic solvent include N,N-dimethylacetamide, N,N-dimethylformamide, N-methyl-2-pyrrolidone, 1,3-dimethyl-2-imidazolidinone, γ-butyrolactone, sulfolane, dimethyl sulfoxide, diethyl sulfoxide, dimethyl sulfone, diethyl sulfone, diisopropyl sulfone, diphenyl sulfone, diphenyl ether, benzophenone, methylene chloride, benzene, toluene, xylene, benzonitrile, dialkoxybenzenes (having alkoxy groups each having 1 to 4 carbon atoms), trialkoxybenzenes (having alkoxy groups each having 1 to 4 carbon atoms), hexane, cyclohexane, octane, chlorobenzene, dioxane, tetrahydrofuran, anisole, and phenetole. Those organic solvents may be used alone or in combination thereof.

A reaction temperature at the time of the synthesis of the [A] polymer is, for example, 0°C or more and 250°C or less. A reaction time is, for example, 5 minutes or more and 100 hours or less.

### <Weight-average Molecular Weight (Mw) of [A] Polymer>

The lower limit of the weight-average molecular weight (Mw) of the [A] polymer is preferably 500, more preferably 1,000, still more preferably 5,000, particularly preferably 10,000. In addition, the upper limit of the Mw is preferably 400,000, more preferably 300,000, still more preferably 200,000, particularly preferably 150,000. When the Mw is set to be equal to or more than the lower limit, the heat resistance can be further improved. In addition, the mechanical strength of a molded article (e.g., a film) can be improved. Meanwhile, when the Mw is set to be equal to or less than the upper limit, the moldability of the polymer can be further improved.

The Mw is a value measured by gel permeation chromatography (GPC) under the following measurement conditions.

Column: column in which "TSKgel α-M" manufactured by Tosoh Corporation and "TSKgel guardcolumn α" manufactured by Tosoh Corporation are connected to each other
Developing solvent: N-methyl-2-pyrrolidone (with 10 mM LiBr)
Column temperature: 40°C
Flow rate: 1.0 mL/min
Sample concentration: 0.75 mass%
Sample injection amount: 50 µL
Detector: differential refractometer
Standard substance: monodisperse polystyrene

### <Glass Transition Temperature (Tg) of [A] Polymer>

The lower limit of the glass transition temperature of the [A] polymer is preferably 150°C, more preferably 200°C. The upper limit of the glass transition temperature is preferably 300°C, more preferably 280°C, still more preferably 270°C. When the glass transition temperature is set to be equal to or more than the lower limit, the heat resistance can be further improved. Meanwhile, when the glass transition temperature is more than the upper limit, the moldability may reduce. The glass transition temperature is, for example, a value measured with a differential scanning calorimeter under a nitrogen atmosphere at a rate of temperature increase of 20°C/min.

### <Composition>

The composition in the present invention preferably includes the [A] polymer and a curable compound. In addition, the composition may include any other component, such as an organic solvent, to the extent that the effects of the present invention are not impaired. The composition can be used as a highly versatile composition applicable to various applications because the composition includes the [A] polymer excellent in solubility in various organic solvents. In addition, the composition in the present invention includes the [A] polymer excellent in heat resistance and mechanical characteristics, and hence the heat deterioration of a molded body obtained from the composition can be suppressed, and high mechanical characteristics and high dimensional stability can be imparted thereto.

Examples of the organic solvent include the same examples as those of the above-mentioned organic solvent to be used at the time of the synthesis of the [A] polymer. In addition, the composition includes the [A] polymer excellent in solubility in various organic solvents, and hence, for example, a polyhydric alcohol ether, such as diethylene glycol ethyl methyl ether, may be used in addition to the above-mentioned organic solvent to be used at the time of the synthesis of the [A] polymer. Those organic solvents may be used alone or in combination thereof.

The content of the [A] polymer in the composition of the present invention may be set to, for example, 10 mass% or more and 100 mass% or less in the total solid content of the composition.

The content of the organic solvent in the composition of the present invention may be set to, for example, 50 parts by mass or more and 100,000 parts by mass or less with respect to 100 parts by mass of the [A] polymer.

Examples of the other component include an antioxidant, a lubricant, a flame retardant, an antimicrobial agent, a colorant, a release agent, a foaming agent, and any other polymer other than the [A] polymer. Those other components may be used alone or in combination thereof.

Examples of the antioxidant include a hindered phenol-based compound, a phosphorus-based compound, a sulfur-based compound, a metal-based compound, and a hindered amine-based compound. Of those, a hindered phenol-based compound is preferred.

The hindered phenol-based compound is preferably a hindered phenol-based compound having a molecular weight of 500 or more. Examples of the hindered phenol-based compound having a molecular weight of 500 or more include triethylene glycol-bis[3-(3-t-butyl-5-methyl-4-hydroxyphenyl)propionate], 1,6-hexanediol-bis[3-(3,5-di-t-butyl-4-hydroxyphenyl)propionate], 2,4-bis-(n-octylthio)-6-(4-hydroxy-3,5-di-t-butylanilino)-3,5-triazine, pentaerythritol tetrakis[3-(3,5-t-butyl-4-hydroxyphenyl)propionate], 1,1,3-tris[2-methyl-4-[3-(3,5-di-t-butyl-4-hydroxyphenyl)propionyloxy]-5-t-butylphenyl ]butane, 2,2-thio-diethylenebis[3-(3,5-di-t-butyl-4-hydroxyphenyl)propionate], octadecyl-3-(3,5-di-t-butyl-4-hydroxyphenyl)propionate, N,N-hexamethylenebis(3,5-di-t-butyl-4-hydroxy-hydrocinnamamide), 1,3,5-trimethyl-2,4,6-tris(3,5-di-t-butyl-4-hydroxybenzyl)benzene, tris-(3,5-di-t-butyl-4-hydroxybenzyl)-isocyanurate, and 3,9-bis[2-[3-(3-t-butyl-4-hydroxy-5-methylphenyl)propionyloxy]-1,1-dimethylethyl]-2, 4,8,10-tetraoxaspiro[5.5]undecane.

When the composition in the present invention includes the antioxidant, the content of the antioxidant is, for example, 0.01 part by mass or more and 10 parts by mass or less with respect to 100 parts by mass of the [A] polymer.

The composition in the present invention is prepared by uniformly mixing the [A] polymer and the organic solvent, and, as required, the other component, such as the antioxidant. The composition is prepared in, for example, a liquid form or a paste form.

### <Curable Compound>

The curable compound in the present invention is a compound that is cured by being irradiated with heat or light (e.g., visible light, UV light, a near-infrared ray, a far-infrared ray, or an electron beam), and may be a compound that requires a curing aid to be described later. Examples of such curable compound include an epoxy compound, a cyanate ester compound, a vinyl compound, a silicone compound, an oxazine compound, a maleimide compound, an allyl compound, an acrylic compound, a methacrylic compound, and a urethane compound. Those curable compounds may be used alone or in combination thereof. Of those, at least one kind of an epoxy compound, a cyanate ester compound, a vinyl compound, a silicone compound, an oxazine compound, a maleimide compound, and an allyl compound is preferred, and at least one kind of an epoxy compound, a cyanate ester compound, a vinyl compound, an allyl compound, and a silicone compound is particularly preferred from the viewpoints of characteristics, such as compatibility with the [A] polymer and heat resistance.

Examples of the epoxy compound include a known epoxy resin, "XER-81" (that is epoxy-containing NBR particles manufactured by JSR Corporation), a polyglycidyl ether of a dicyclopentadiene-phenol polymer, a phenol novolac-type liquid epoxy, an epoxidized product of a styrene-butadiene block copolymer, and 3',4'-epoxycyclohexylmethyl-3,4-epoxycyclo hexane carboxylate.

### (Content of Curable Compound)

For example, when the entirety of the composition of the present invention is defined as 100 mass%, the content of the curable compound in the composition is preferably 0.05 mass% or more and 99.95 mass% or less, more preferably 10 mass% or more and 90 mass% or less, still more preferably 20 mass% or more and 80 mass% or less. A case in which the content falls within the range is preferred from the viewpoint of further improving the toughness, heat resistance, and chemical resistance of a cured product. In addition, when the total of the curable compound and the [A] polymer is defined as 100 mass%, the content of the curable compound is preferably 1 mass% or more and 99 mass% or less, more preferably 5 mass% or more and 95 mass% or less, still more preferably 10 mass% or more and 90 mass% or less. A case in which the content falls within the range is preferred from the viewpoint of further improving the toughness, heat resistance, and chemical resistance of the cured product.

### [Curing Aid]

The composition in the present invention may include a curing aid as required. Examples of the curing aid may include a curing agent and a polymerization initiator, such as a photoreaction initiator (a photoradical generator, a photoacid generator, or a photobase generator). Those curing agents may be used alone or in combination thereof irrespective of their kinds.

As a curing aid in the case where the epoxy compound is used as the curable compound, there may be used, for example, curing agents, such as an amine-based curing agent, an acid or acid anhydride-based curing agent, a basic active hydrogen compound, an imidazole, a polymercaptan-based curing agent, a phenol resin, a urea resin, a melamine resin, an isocyanate-based curing agent, and a Lewis acid.

Examples of the amine-based curing agent include: polyamines, such as ethylenediamine, diethylenetriamine, triethylenetetramine, tetraethylenepentamine, hexamethylenediamine, iminobispropylamine, bis(hexamethylene)triamine, and 1,3,6-trisaminomethylhexane; polymethylenediamines, such as trimethylhexamethylenediamine, polyetherdiamine, and diethylaminopropylamine; cyclic aliphatic polyamines, such as menthenediamine (MDA), isophoronediamine (IPDA), bis(4-amino-3-methylcyclohexyl)methane, diaminodicyclohexylmethane, bisaminomethylcyclohexane, 3,9-bis(3-aminopropyl)-2,4,8,10-tetraoxaspiro[5.5]undecane, and a diamine having a norbornane skeleton, typified by NBDA manufactured by Mitsui Chemicals, Inc.; aliphatic polyamines each having an aromatic ring, such as m-xylylenediamine (MXDA); and aromatic polyamines, such as m-phenylenediamine, diaminodiphenylmethane, diaminodiphenyl sulfone, and diaminodiethyldiphenylmethane, and derivatives thereof.

Further, other examples of the amine-based curing agent include: a Mannich-modified diamine obtained by subjecting a polyamine to a reaction with an aldehyde and/or phenol; an amine adduct (polyamine epoxy resin adduct), a polyamine-ethylene oxide adduct, a polyamine-propylene oxide adduct, a cyanoethylated polyamine, or a ketimine, which is a product of a reaction between an aliphatic polyamine and a ketone; secondary amines or tertiary amines, such as tetramethylguanidine, triethanolamine, piperidine, pyridine, benzyldimethylamine, picoline, 2-(dimethylaminomethyl)phenol, dimethylcyclohexylamine, dimethylbenzylamine, dimethylhexylamine, dimethylaminophenol, dimethylamino-p-cresol, N,N'-dimethylpiperazine, 1,4-diazabicyclo[2.2.2]octane, 2,4,6-tris(dimethylaminomethyl)phenol, and 1,8-diazabicyclo[5.4.0]-7-undecene; and a liquid polyamide obtained by subjecting a dimer acid to a reaction with a polyamine, such as diethylenetriamine or triethylenetetramine.

Examples of the acid or acid anhydride-based curing agent include: polycarboxylic acids, such as adipic acid, azelaic acid, and decanedicarboxylic acid; aromatic acid anhydrides, such as phthalic anhydride, trimellitic anhydride, ethylene glycol bis(anhydrotrimellitate), glycerol tris(anhydrotrimellitate), pyromellitic anhydride, and 3,3',4,4'-benzophenonetetracarboxylic anhydride; cyclic aliphatic acid anhydrides, such as maleic anhydride, succinic anhydride, tetrahydrophthalic anhydride, methyltetrahydrophthalic anhydride, methylnadic anhydride, an alkenylsuccinic anhydride, hexahydrophthalic anhydride, methylhexahydrophthalic anhydride, methylcyclohexene tetracarboxylic anhydride, methyl himic anhydride, a trialkyl tetrahydrophthalic anhydride, and poly(phenylhexadecanedioic) anhydride; aliphatic acid anhydrides, such as polyadipic anhydride, polyazelaic anhydride, polysebacic anhydride, dodecenylsuccinic anhydride, and poly(ethyloctadecanedioic) anhydride; and halogenated acid anhydrides, such as chlorendic anhydride, tetrabromophthalic anhydride, and het anhydride.

Examples of the basic active hydrogen compound include dicyandiamide and organic acid dihydrazides.

Examples of the imidazole include 2-methylimidazole, 2-ethyl-4-methylimidazole, 2-undecylimidazole, 2-heptadecylimidazole, 2-phenylimidazole, 1-benzyl-2-methylimidazole, 1 -cyanoethyl-2-methylimidazole, 1-cyanoethyl-2-ethyl-4-methylimidazole, 2-methylimidazolium isocyanurate, 2,4-diamino-6- [2-methylimidazoline-(1)]-ethyl-S-triazine, and 2,4-diamino-6-[2-ethyl-4-methylimidazoline-(1)]-ethyl-S-triazine.

Examples of the polymercaptan-based curing agent include: partial epoxy adducts of 2,2'-bismercaptoethyl ether; thioglycolic acid esters, such as pentaerythritol tetrathioglycolate, dipentaerythritol hexathioglycolate, and trimethylolpropane tristhioglycolate; and compounds each having a mercapto group, such as polysulfide rubber having a mercapto group at an end thereof.

Examples of the isocyanate-based curing agent include: isocyanate compounds, such as toluene diisocyanate, hexamethylene diisocyanate, and xylene diisocyanate; and blocked isocyanate compounds each obtained by subjecting an isocyanate group to a reaction with a blocking agent, such as phenol, an alcohol, or a caprolactam, to mask the isocyanate group.

Examples of the Lewis acid include a diaryliodonium salt and a triarylsulfonium salt.

In addition, as the curing aid in this case, there may be used photoacid generators, such as an onium salt compound, a sulfone compound, a sulfonic acid ester compound, a sulfonimide compound, a disulfonyl diazomethane compound, a disulfonyl methane compound, an oxime sulfonate compound, a hydrazine sulfonate compound, a triazine compound, a nitrobenzyl compound, an organic halide, and disulfone.

Further, as the curing aid in this case, there may be used, for example, photobase generators, such as (Z)-{[bis(dimethylamino)methylidene]amino}-N-cyclohexyl(cyclohexylamino)methani minium tetrakis(3-fluorophenyl)borate, 1,2-dicyclohexyl-4,4,5,5-tetramethylbiguanidium n-butyltriphenylborate, 9-anthrylmethyl N,N-diethylcarbamate, (E)-1-[3-(2-hydroxyphenyl)-2-propenoyl]piperidine, 1-(anthraquinon-2-yl)ethyl imidazolecarboxylate, 2-nitrophenylmethyl 4-methacryloyloxypiperidine-1-carboxylate, and 1,2-diisopropyl-3-[bis(dimethylamino)methylene]guanidium 2-(3-benzoylphenyl)propionate.

As a curing aid in the case where the cyanate ester compound is used as the curable compound, there may be used curing agents including a tertiary amine of octanoic acid, stearic acid, an acetylacetonate, naphthenic acid, salicylic acid, or the like, and imidazoles, such as 2-ethyl-4-imidazole and 4-methylimidazole. Further, the photoacid generator or the photobase generator described as the curing aid in the case where the epoxy compound is used may be used.

A curing aid in the case where the vinyl compound is used as the curable compound is, for example, a compound that generates a cationic or radical active species with heat or light. Examples of the cationic polymerization agent include a diaryliodonium salt and a triarylsulfonium salt. Examples of the radical polymerization agent include: benzoin-based compounds, such as benzoin acetophenone; acetophenone-based compounds, such as 2,2-dimethoxy-2-phenylacetophenone; sulfur-based compounds, such as 2,4-diethylthioxanthone; azo compounds, such as azobisisobutyronitrile; and organic peroxides, such as 2,5-dimethyl-2,5-di(t-butylperoxy)hexane and dicumyl peroxide. There may also be used photoradical generators, such as acetophenone, propiophenone, benzophenone, xanthol, fluorene, benzaldehyde, anthraquinone, triphenylamine, carbazole, 3-methylacetophenone, 4-methylacetophenone, 3-pentylacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoyl, benzoin methyl ether, benzoin butyl ether, bis(4-dimethylaminophenyl) ketone, benzyl methoxy ketal, and 2-chlorothioxanthone.

As a curing aid in the case where the silicone compound is used as the curable compound, there may be used curing agents including: zinc benzoate; zinc octoate; and platinum group metal catalysts including platinum-based catalysts, such as platinum black, platinic chloride, chloroplatinic acid, a product of a reaction between chloroplatinic acid and a monohydric alcohol, a complex of chloroplatinic acid and an olefin, and platinum bisacetoacetate, palladium-based catalysts, and rhodium-based catalysts. There may also be used photoreaction initiators, such as acetophenone, propiophenone, benzophenone, xanthol, fluorene, benzaldehyde, anthraquinone, triphenylamine, carbazole, 3-methylacetophenone, 4-methylacetophenone, 3-pentylacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 2,2'-diethoxyacetophenone, 4-chloro-4'-benzylbenzophenone, 3-chloroxanthone, 3,9-dichloroxanthone, 3-chloro-8-nonylxanthone, benzoin, benzoin methyl ether, benzoin butyl ether, bis(4-dimethylaminophenyl) ketone, benzyl methoxy ketal, 2-chlorothioxanthone, diethylacetophenone, 1-hydroxycyclohexyl phenyl ketone, 2-methyl-1{4-(methylthio)phenyl}-2-morpholin-1-one, 2-benzyl-2-dimethylamino-1-(4-morpholinophenyl)-butan-1-one, 1-{4-(2-hydroxyethoxy)-phenyl}-2-methyl-1-propan-1-one, 2,2-dimethoxy-2-phenylacetophenone, 2-hydroxy-2-methyl-1-phenyl-propan-1-one, and cyclohexyl phenyl ketone.

As a curing aid in the case where the oxazine compound is used as the curable compound, there may be used curing agents including: phenol and derivatives thereof; cyanic acid esters; Brønsted acids, such as p-toluenesulfonic acid; adipic acid; p-toluenesulfonic acid esters; aromatic amine compounds, such as 4,4'-diaminodiphenyl sulfone and melamine; bases, such as 2-ethyl-4-methylimidazole; and Lewis acids, such as boron trifluoride. Further, the photoacid generator or the photobase generator described as the curing aid in the case where the epoxy compound is used may be used.

As a curing aid in the case where the maleimide compound is used as the curable compound, there may be used curing agents including: bases, such as imidazole, 1-methylimidazole, 1-benzyl-2-methylimidazole, 2-methylimidazoline, N,N-diisopropylethylamine, 1,4-dimethylpiperazine, quinoline, triazole, benzotriazole, and DBU; phosphorus compounds, such as triphenylphosphine; and azobisisobutyronitrile. Further, the photoacid generator or the photobase generator described as the curing aid in the case where the epoxy compound is used may be used.

As a curing aid in the case where the allyl compound is used as the curable compound, there may be used curing agents including: azo initiators, such as azobisisobutyronitrile and dimethyl 2,2'-azobisisobutyrate; peroxides, such as a ketone peroxide, a peroxyketal, a hydroperoxide, a dialkyl peroxide, a diacyl peroxide, a peroxydicarbonate, and a peroxyester; acetophenone-based curing agents, such as 2-methyl-1-[4-(methylthio)phenyl]-2-morpholinopropane-1,1'-hydroxycyclohexyl phenyl ketone; benzoin-based curing agents, such as benzoin and benzoin ethyl ether; benzophenone-based curing agents, such as benzophenone, phosphorus-based curing agents, such as an acyl phosphine oxide; sulfur-based curing agents, such as a thioxanthone-based curing agent; benzil-based curing agents, such as benzil and 9,10-phenanthrenequinone; and peroxycarbonate-based curing agents. Further, the photoacid generator or the photobase generator described as the curing aid in the case where the epoxy compound is used may be used.

### (Content of Curing Aid)

When the composition in the present invention includes a curing aid, the content of the curing aid only needs to fall within such a range that the composition is satisfactorily cured to provide a cured product. For example, the content is preferably 5 parts by mass or more and 20 parts by mass or less, more preferably 5 parts by mass or more and 10 parts by mass or less with respect to 100 parts by mass of the total of the [A] polymer and the curable compound.

### [Solvent]

The composition in the present invention may include a solvent as required. Examples of the solvent include: amide-based solvents, such as N,N-dimethylacetamide, N,N-dimethylformamide, 1,3-dimethyl-2-imidazolidinone, N-methyl-2-pyrrolidone, and N-ethyl-2-pyrrolidone; ester-based solvents, such as γ-butyrolactone and butyl acetate; ketone-based solvents, such as cyclopentanone, cyclohexanone, methyl ethyl ketone, and benzophenone; ether-based solvents, such as 1,2-methoxyethane and diphenyl ether; polyfunctional solvents, such as 1-methoxy-2-propanol and propylene glycol methyl ether acetate; sulfone-based solvents, such as sulfolane, dimethyl sulfoxide, diethyl sulfoxide, dimethyl sulfone, diethyl sulfone, diisopropyl sulfone, and diphenyl sulfone; and methylene chloride, benzene, toluene, xylene, dialkoxybenzenes (having alkoxy groups each having 1 to 4 carbon atoms), and trialkoxybenzenes (having alkoxy groups each having 1 to 4 carbon atoms). Those solvents may be used alone or in combination thereof.

### [Method of preparing Composition]

Although a method of preparing the composition in the present invention is not particularly limited, the composition may be prepared by, for example, uniformly mixing the [A] polymer and the curable compound, and, as required, any other additive (e.g., any other component, such as a curing aid, a solvent, or an antioxidant). In addition, the form of the composition may be, for example, a liquid form or a paste form. In particular, the [A] polymer in the present invention is excellent in solubility, and hence a solventless composition can be obtained by dissolving the polymer in a liquid curable compound.

### <Molded Body>

The molded body in the present invention includes the [A] polymer and is obtained from, for example, the above-mentioned composition. The molded body includes the [A] polymer excellent in heat resistance and mechanical characteristics, and hence its heat deterioration can be suppressed, and high mechanical characteristics and high dimensional stability can be imparted thereto.

Examples of the molded body in the present invention include: optical parts (e.g., optical films, such as a wavelength plate and a phase difference plate, various special lenses, such as a conical lens, a spherical lens, and a cylindrical lens, and lens arrays); insulating films for printed wiring boards; copper foil laminated plates; sealing materials for electrical and electronic parts; interlayer insulating films; heat-resistant protective films; laminated plates (e.g., a printed wiring board, a cover lay, an interlayer adhesive, solder resist, and solder paste); adhesives (e.g., a conductive adhesive and a thermally conductive adhesive/adhesive sheet); and various coatings. The molded body can be particularly preferably used as a material for a packaging structure described in, for example, "Demonstration of 20 µm Pitch Micro-vias by Excimer Laser Ablation in Ultra-thin Dry-film Polymer Dielectrics for Multi-layer RDL on Glass Interposers," 2015 IEEE Electronic Components & Technology Conference, 922-927, "Demonstration of Enhanced System-level Reliability of Ultra-thin BGA Packages with Circumferential Polymer Collars and Doped Solder Alloys," 2016 IEEE 66th Electronic Components and Technology Conference, 1377-1385, "Modeling, Design, Fabrication and Demonstration of RF Front-End 3D IPAC Module with Ultra-thin Glass Substrates for LTE Applications," 2016 IEEE 66th Electronic Components and Technology Conference, 1297-1302, "Design, Demonstration and Characterization of Ultra-thin Low-warpage Glass BGA Packages for Smart Mobile Application Processor," 2016 IEEE 66th Electronic Components and Technology Conference, 1465-1470, and "Design and Demonstration of Ultra-thin Glass 3D IPD Diplexers," 2016 IEEE 66th Electronic Components and Technology Conference, 2348-2352.

The molded body in the present invention may be produced by, for example, a die molding method, an extrusion molding method, or a solvent casting method. The die molding method is preferred for the production of a lens. The extrusion molding method and the solvent casting method are preferred for the production of an optical film and an insulating film for a printed wiring board, and the extrusion molding method is more preferred.

The lower limit of the average thickness of the optical film is preferably 10 µm. The upper limit of the average thickness is preferably 1,000 µm, more preferably 500 µm. When the average thickness is less than the lower limit, it may be impossible to sufficiently secure the strength of the film. Meanwhile, when the average thickness is more than the upper limit, it may be impossible to secure the transparency of the film.

### Examples

The present invention is more specifically described below by way of Examples. However, the present invention is by no means limited to these Examples. The terms "part(s)" and "%" in the following are on a mass basis unless otherwise stated.

### [¹H-NMR Analysis]

The ¹H-NMR analysis of a polymer was performed by using a nuclear magnetic resonance apparatus ("ECX400P" manufactured by JEOL Ltd.) and deuterated chloroform as a measurement solvent.

### [Synthesis of Polymer]

### (Example 1)

1,1-Bis(4-hydroxyphenyl)-3,3,5-trimethylcyclohexane (hereinafter sometimes referred to as "TMC") (9.3 g, 30.0 mmol), 3-t-butyl-1,4-dihydroxybenzene (hereinafter sometimes referred to as "tBuHQ") (5.0 g, 30.0 mmol), p-t-butylphenol (hereinafter sometimes referred to as "PTBP") serving as an end terminator (0.108 g, 0.72 mmol), sodium hydroxide (NaOH) serving as an alkali metal compound (5.1 g, 126.8 mmol), and tri-n-butylbenzyl ammonium chloride (hereinafter sometimes referred to as "TBBAC") serving as a phase-transfer catalyst (0.108 g, 0.24 mmol) were weighed in a four-necked separable flask including a stirring device, and ion-exchanged water (120 g) was added to the mixture. Thus, a diol monomer aqueous solution was prepared.

Separately, a dicarboxylic acid halide monomer organic solution was prepared by dissolving terephthaloyl chloride (hereinafter sometimes referred to as "TPC") (6.1 g, 30.2 mmol) and isophthaloyl chloride (hereinafter sometimes referred to as "IPC") (6.1 g, 30.2 mmol) in toluene (116 mL).

After that, the dicarboxylic acid halide monomer organic solution was loaded into the diol monomer aqueous solution under strong stirring, and an interfacial polycondensation reaction was performed under room temperature over 3 hours. After the completion of the reaction, acetic acid was loaded to neutralize the remaining alkali metal compound. The resultant was left at rest to be separated into an aqueous phase and an organic phase, and then the aqueous phase was removed by decantation. The remaining organic phase was washed with ion-exchanged water equal in amount thereto; the operation was repeated three times. The organic phase after the washing was loaded into an excessive amount of methanol under strong stirring, and a precipitated solid was separated by filtration and recovered. After that, the recovered solid was dried with a vacuum dryer under reduced pressure at 120°C for 12 hours to provide a polymer P1 of Example 1 represented by the following formula (P-1) (yield: 18 g, percent yield: 81%).

The structure of the resultant polymer P1 was identified by ¹H-NMR. Chemical shift values at this time are described below.
¹H-NMR (CDCl₃-d, 400 MHz) δ (ppm): 8.96-9.94 (m, 0.5H), 8.47-8.27 (m, 3.5H), 7.65 (m, 0.5H), 7.36 (d, 4H), 7.13 (d, 4H), 2.62 (dd, 2H), 2.03 (m, 2H), 1.40 (s, 2.5H), 1.24 (s, ¹H), 1.01 (s, 6H), 0.91 (s, ¹H), 0.42 (s, 3H)

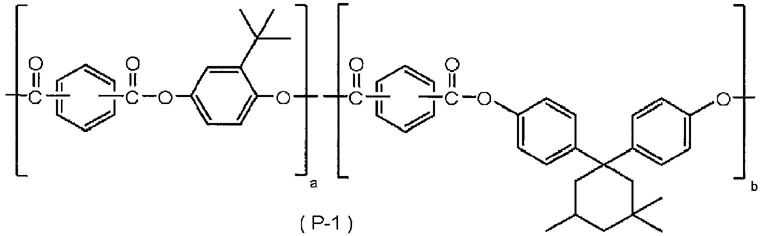

### (Example 2)

A polymer P2 of Example 2 having the same structure as that represented by the formula (P-1) was obtained (yield: 29 g, percent yield: 97%) in the same manner as in Example 1 except that the usage amounts of the compounds in the synthesis of the polymer of Example 1 were changed as follows: TMC (18.6 g, 60.0 mmol), tBuHQ (1.8 g, 10.6 mmol), PTBP (0.127 g, 0.85 mmol), TBBAC (0.154 g, 0.49 mmol), NaOH (6.0 g, 149.0 mmol), ion-exchanged water (163 g), TPC (7.2 g, 35.5 mmol), IPC (7.2 g, 35.5 mmol), and toluene (136 mL).

The structure of the resultant polymer P2 of Example 2 was identified by ¹H-NMR. Chemical shift values at this time are described below.
¹H-NMR (CDCl₃-d, 400 MHz) δ (ppm): 9.0-8.9 (m, 0.5H), 8.47-8.27 (d, 3.5H), 7.65 (s, 0.5H), 7.43 (d, 2H), 7.27 (d, 2H), 7.17 (d, 2H), 7.09 (d, 2H), 2.73 (s, ¹H), 2.50 (s, ¹H), 2.05-1.99 (m, 2H), 1.55 (s, 2.5H), 1.24 (t, ¹H), 1.01 (s, 6H), 0.91 (t, ¹H), 0.42 (s, 3H)

### (Example 3)

A polymer P3 of Example 3 having the same structure as that represented by the formula (P-1) was obtained (yield: 28 g, percent yield: 87%) in the same manner as in Example 1 except that the usage amounts of the compounds in the synthesis of the polymer of Example 1 were changed as follows: TMC (18.6 g, 60.0 mmol), tBuHQ (3.3 g, 20.0 mmol), PTBP (0.144 g, 0.96 mmol), TBBAC (0.175 g, 0.56 mmol), NaOH (6.8 g, 169.0 mmol), ion-exchanged water (177 g), TPC (10.6 g, 52.3 mmol), IPC (5.7 g, 28.2 mmol), and toluene (154 mL).

### (Example 4)

A polymer P4 of Example 4 having the same structure as that represented by the formula (P-1) was obtained (yield: 31 g, percent yield: 98%) in the same manner as in Example 1 except that the usage amounts of the compounds in the synthesis of the polymer of Example 1 were changed as follows: TMC (15.5 g, 50.0 mmol), tBuHQ (5.0 g, 30.0 mmol), PTBP (0.144 g, 0.96 mmol), TBBAC (0.175 g, 0.56 mmol), NaOH (6.8 g, 169.0 mmol), ion-exchanged water (177 g), TPC (9.8 g, 48.3 mmol), IPC (6.5 g, 32.2 mmol), and toluene (154 mL).

### (Example 5)

TMC (12.4 g, 40.0 mmol), 3,5-di-t-butyl-2,6-dihydroxybenzene (8.9 g, 40.0 mmol), PTBP serving as an end terminator (0.144 g, 0.96 mmol), sodium hydroxide serving as an alkali metal compound (6.8 g, 169.0 mmol), and TBBAC serving as a phase-transfer catalyst (0.175 g, 0.56 mmol) were weighed in a four-necked separable flask including a stirring device, and ion-exchanged water (173 g) was added to the mixture. Thus, a diol monomer aqueous solution was prepared.

Separately, a dicarboxylic acid halide monomer organic solution was prepared by dissolving TPC (8.2 g, 40.2 mmol) and IPC (8.2 g, 40.2 mmol) in toluene (154 mL). The dicarboxylic acid halide monomer organic solution was loaded into the diol monomer aqueous solution under strong stirring, and an interfacial polycondensation reaction was performed under room temperature over 3 hours. After the completion of the reaction, acetic acid was loaded to neutralize the remaining alkali metal compound. The resultant was left at rest to be separated into an aqueous phase and an organic phase, and then the aqueous phase was removed by decantation. The remaining organic phase was washed with ion-exchanged water equal in amount thereto; the operation was repeated three times. The organic phase after the washing was loaded into an excessive amount of methanol under strong stirring, and a precipitated solid was separated by filtration and recovered. After that, the recovered solid was dried with a vacuum dryer under reduced pressure at 120°C for 12 hours to provide a polymer P5 of Example 5 represented by the following formula (P-2) (yield: 29 g, percent yield: 92%).

The structure of the resultant polymer P5 was identified by ¹H-NMR. Chemical shift values at this time are described below.
¹H-NMR (CDCl₃-d, 400 MHz) δ (ppm): 9.03-9.00 (m, ¹H), 8.48-8.42 (m, 2H), 8.35-8.29 (m, 4H), 8.48-8.42 (m, 2H), 7.67 (m, ¹H), 7.51 (s, ¹H), 7.43 (d, 2H), 7.27 (d, 2H), 7.17 (d, 2H), 7.09 (d, 2H), 7.00 (s, 2H), 2.72 (d, ¹H), 2.50 (d, 2H), 2.03-1.99 (m, 2H), 1.41 (s, 18H), 1.24 (t, ¹H), 1.01 (s, 6H), 0.42 (s, 3H)

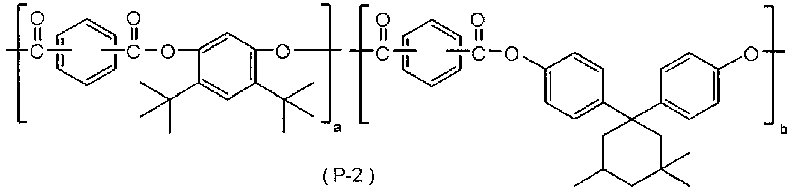

### (Example 6)

Phenolphthalein (12.7 g, 40.0 mmol), tBuHQ (6.6 g, 40.0 mmol), PTBP serving as an end terminator (0.144 g, 0.96 mmol), sodium hydroxide serving as an alkali metal compound (6.8 g, 169.0 mmol), and TBBAC serving as a phase-transfer catalyst (0.175 g, 0.56 mmol) were weighed in a four-necked separable flask including a stirring device, and ion-exchanged water (161 g) was added to the mixture. Thus, a diol monomer aqueous solution was prepared.

Separately, a dicarboxylic acid halide monomer organic solution was prepared by dissolving TPC (8.2 g, 40.2 mmol) and IPC (8.2 g, 40.2 mmol) in toluene (154 mL). The dicarboxylic acid halide monomer organic solution was loaded into the diol monomer aqueous solution under strong stirring, and an interfacial polycondensation reaction was performed under room temperature over 3 hours. After the completion of the reaction, acetic acid was loaded to neutralize the remaining alkali metal compound. The resultant was left at rest to be separated into an aqueous phase and an organic phase, and then the aqueous phase was removed by decantation. The remaining organic phase was washed with ion-exchanged water equal in amount thereto; the operation was repeated three times. The organic phase after the washing was loaded into an excessive amount of methanol under strong stirring, and a precipitated solid was separated by filtration and recovered. After that, the recovered solid was dried with a vacuum dryer under reduced pressure at 120°C for 12 hours to provide a polymer P6 of Example 6 represented by the following formula (P-3) (yield: 27 g, percent yield: 90%).

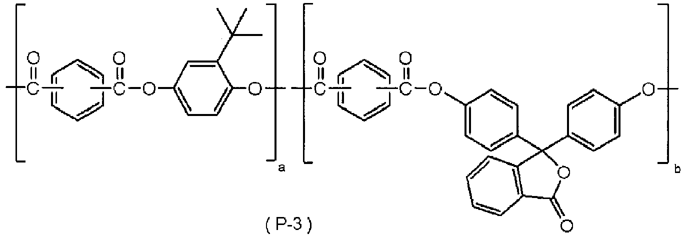

### (Example 7)

Fluorescein (13.3 g, 40.0 mmol), tBuHQ (6.6 g, 40.0 mmol), PTBP serving as an end terminator (0.144 g, 0.96 mmol), sodium hydroxide serving as an alkali metal compound (6.8 g, 169.0 mmol), and TBBAC serving as a phase-transfer catalyst (0.175 g, 0.56 mmol) were weighed in a four-necked separable flask including a stirring device, and ion-exchanged water (165 g) was added to the mixture. Thus, a diol monomer aqueous solution was prepared.

Separately, a dicarboxylic acid halide monomer organic solution was prepared by dissolving TPC (8.2 g, 40.2 mmol) and IPC (8.2 g, 40.2 mmol) in toluene (154 mL). The dicarboxylic acid halide monomer organic solution was loaded into the diol monomer aqueous solution under strong stirring, and an interfacial polycondensation reaction was performed under room temperature over 3 hours. After the completion of the reaction, acetic acid was loaded to neutralize the remaining alkali metal compound. The resultant was left at rest to be separated into an aqueous phase and an organic phase, and then the aqueous phase was removed by decantation. The remaining organic phase was washed with ion-exchanged water equal in amount thereto; the operation was repeated three times. The organic phase after the washing was loaded into an excessive amount of methanol under strong stirring, and a precipitated solid was separated by filtration and recovered. After that, the recovered solid was dried with a vacuum dryer under reduced pressure at 120°C for 12 hours to provide a polymer P7 of Example 7 represented by the following formula (P-4) (yield: 27 g, percent yield: 89%).

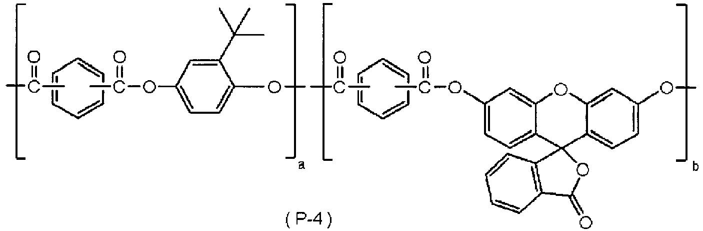

### (Comparative Example 1)

TMC (16.6 g, 53.6 mmol), 2,2-bis(4-hydroxyphenyl)propane (28.5 g, 125.0 mmol), PTBP serving as an end terminator (0.64 g, 4.3 mmol), sodium hydroxide serving as an alkali metal compound (15.1 g, 380.0 mmol), and TBBAC serving as a phase-transfer catalyst (0.39 g, 1.25 mmol) were weighed in a four-necked separable flask including a stirring device, and ion-exchanged water (157 g) was added to the mixture. Thus, a diol monomer aqueous solution was prepared.

Separately, a dicarboxylic acid halide monomer organic solution was prepared by dissolving TPC (18.3 g, 90.4 mmol) and IPC (18.3 g, 90.4 mmol) in toluene (152 mL). The dicarboxylic acid halide monomer organic solution was loaded into the diol monomer aqueous solution under strong stirring, and an interfacial polycondensation reaction was performed under room temperature over 3 hours. After the completion of the reaction, acetic acid was loaded to neutralize the remaining alkali metal compound. The resultant was left at rest to be separated into an aqueous phase and an organic phase, and then the aqueous phase was removed by decantation. The remaining organic phase was washed with ion-exchanged water equal in amount thereto; the operation was repeated three times. The organic phase after the washing was loaded into an excessive amount of methanol under strong stirring, and a precipitated solid was separated by filtration and recovered. After that, the recovered solid was dried with a vacuum dryer under reduced pressure at 120°C for 12 hours to provide a polymer P8 of Comparative Example 1 represented by the following formula (R-1) (yield: 69 g, percent yield: 95%).

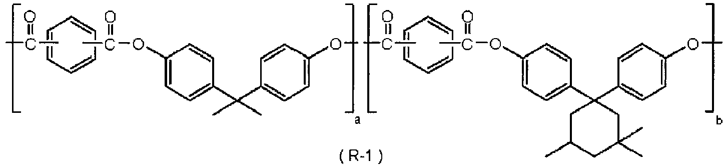

### (Comparative Example 2)

TMC (14.0 g, 45.0 mmol), PTBP serving as an end terminator (0.203 g, 1.35 mmol), sodium hydroxide serving as an alkali metal compound (3.8 g, 95.9 mmol), and TBBAC serving as a phase-transfer catalyst (0.39 g, 1.25 mmol) were weighed in a four-necked separable flask including a stirring device, and ion-exchanged water (157 g) was added to the mixture. Thus, a diol monomer aqueous solution was prepared.

Separately, a dicarboxylic acid halide monomer organic solution was prepared by dissolving TPC (4.6 g, 22.8 mmol) and IPC (4.6 g, 22.8 mmol) in toluene (186 mL). The dicarboxylic acid halide monomer organic solution was loaded into the diol monomer aqueous solution under strong stirring, and an interfacial polycondensation reaction was performed under room temperature over 3 hours. After the completion of the reaction, acetic acid was loaded to neutralize the remaining alkali metal compound. The resultant was left at rest to be separated into an aqueous phase and an organic phase, and then the aqueous phase was removed by decantation. The remaining organic phase was washed with ion-exchanged water equal in amount thereto; the operation was repeated three times. The organic phase after the washing was loaded into an excessive amount of methanol under strong stirring, and a precipitated solid was separated by filtration and recovered. After that, the recovered solid was dried with a vacuum dryer under reduced pressure at 120°C for 12 hours to provide a polymer P9 of Comparative Example 2 represented by the following formula (R-2) (yield: 20 g, percent yield: 97%).

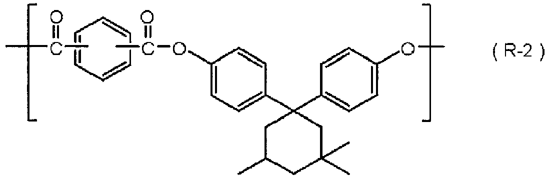

### [Evaluations of Physical Properties of Polymer]

Each polymer obtained as described above was evaluated for its "weight-average molecular weight (Mw)," "glass transition temperature (Tg)," "solvent solubility," and "mechanical characteristics (an elastic modulus and a tensile elongation)" in accordance with the following methods. The results of the evaluations are shown in Table 1. The symbol "-" in the table means that no measurement is performed for the corresponding evaluation item.

### <Weight-average Molecular Weight (Mw)>

The weight-average molecular weight (Mw) of each polymer was measured with a GPC apparatus ("HLC-8320" manufactured by Tosoh Corporation) under the following conditions.
Column: column in which "TSKgel α-M" manufactured by Tosoh Corporation and "TSKgel guardcolumn α" manufactured by Tosoh Corporation are connected to each other
Developing solvent: N-methyl-2-pyrrolidone (with 10 mM LiBr)
Column temperature: 40°C
Flow rate: 1.0 mL/min
Sample concentration: 0.75 mass%
Sample injection amount: 50 µL
Detector: differential refractometer
Standard substance: monodisperse polystyrene

### <Glass Transition Temperature (Tg)>

The glass transition temperature (Tg) of each polymer was defined as a temperature corresponding to the point of intersection of a baseline and a tangent to a point of inflection in the DSC temperature increase curve of a thermogram obtained by using a differential scanning calorimeter (DSC apparatus "Thermo Plus DSC8230" manufactured by Rigaku Corporation) under a nitrogen atmosphere at a rate of temperature increase of 20°C/min. The point of inflection was defined as a temperature corresponding to a peak in a DDSC curve serving as a differential curve of the DSC temperature increase curve. In addition, reference was appropriately made to the DDSC curve for the determination of the baseline of the DSC temperature increase curve.

### <Solubility in Various Organic Solvents>

The solubility of each polymer in various organic solvents was evaluated as described below. Each polymer was added to each of the following various organic solvents at a concentration of 10 mass%, and the mixture was stirred. After that, a case in which no precipitate could be visually observed was indicated by Symbol "A", and a case in which a precipitate was visually observed was indicated by Symbol "B".

### (Kinds of Organic Solvents)

NMP; N-methyl-2-pyrrolidone
CPN; cyclopentanone
EDM; diethylene glycol ethyl methyl ether
GBL; γ-butyrolactone
MMP; methyl 3-methoxypropionate

### <Mechanical Characteristics (Elastic Modulus and Tensile Elongation)>

The tensile elongation (%) and elastic modulus (GPa) of each polymer were measured as described below. A film of each polymer was cut into a strip shape in accordance with JIS K6251 Dumbbell No. 7, and its tensile elongation and elastic modulus were measured with a small table-top tester ("EZ-LX" manufactured by Shimadzu Corporation) under the conditions of room temperature and 5.0 mm/min.

The film of each polymer was obtained by: dissolving 12.5 g of the polymer in 250 mL of methylene chloride; pouring the solution onto a glass substrate; evaporating the solvent under room temperature and a nitrogen atmosphere over 12 hours; and then drying the resultant film at 150°C for 12 hours in a vacuum.

**Table 1**

| | Kind of polymer | Mw | Tg (°C) | Solvent characteristic | | | | | Tensile test | |
|---|---|---|---|---|---|---|---|---|---|---|
| | | | | NMP | CPN | EDM | GBL | MMP | Elastic modulus (GPa) | Tensile elongation (%) |
| Example 1 | P1 | 84,000 | 241 | A | A | A | B | B | 2.7 | 47 |
| Example 2 | P2 | 75,000 | 265 | A | A | B | B | B | 2.2 | 78 |
| Example 3 | P3 | 77,000 | 266 | A | A | B | B | B | 2.1 | 34 |
| Example 4 | P4 | 107,000 | 256 | A | A | B | B | B | 2.2 | 33 |
| Example 5 | P5 | 12,000 | 234 | A | A | A | A | A | - | - |
| Example 6 | P6 | 35,000 | 262 | - | - | - | - | - | - | - |
| Example 7 | P7 | 21,000 | 268 | - | - | - | - | - | - | - |
| Comparative Example 1 | P8 | 73,000 | 226 | A | A | B | A | B | 2.0 | 67 |
| Comparative Example 2 | P9 | 67,000 | 270 | B | B | B | B | B | 1.9 | 61 |

As is apparent from Table 1, the Tg in each of Examples 1 to 7 showed a value as high as 234°C or more. In addition, each of Examples 1 to 5 was soluble in two or more kinds of organic solvent (i.e., two or more solvent characteristics were indicated by Symbol "A"). In particular, Examples 1 to 4 each showed an elastic modulus as high as 2.1 GPa or more and a tensile elongation as high as 33% or more, and hence it was able to be confirmed that the examples had satisfactory mechanical characteristics. Meanwhile, Comparative Example 1 was soluble in two or more kinds of organic solvent, and showed an elastic modulus of 2.0 GPa and a tensile elongation of 67%, but its Tg was 226°C, which was lower than those of Examples. In addition, Comparative Example 2 had a Tg as high as 270°C, and showed an elastic modulus of 1.9 GPa and a tensile elongation of 61%, but was insoluble in each of the organic solvents (i.e., all solvent characteristics were indicated by Symbol "B"). It is understood from the foregoing results that the polymer of the present invention can be improved in solubility in various organic solvents and mechanical characteristics while showing a high Tg.

### [Example 8]

### (Preparation of Composition)

20 Parts of the polymer PI produced in Example 1 described above, 100 parts of a product available under the product name "jER 828" (manufactured by Mitsubishi Chemical Corporation, bisphenol A-type liquid epoxy resin, epoxy equivalent: 230 g/eq to 270 g/eq) serving as a curable compound, 5 parts of dicyandiamide, and 180 parts of methyl ethyl ketone were mixed in a paint shaker (using 2.5 mmϕ zirconia beads) to prepare a composition.

### (Shear Strength)

A nonwoven fabric (nylon nonwoven fabric manufactured by Japan Vilene Company, Ltd., thickness: 40 µm, mass per unit area: 13 g/m²) was coated with the produced composition by dipping. After that, the coated fabric was heated at 50°C for 10 minutes, and was then heated at 70°C for 30 minutes while being pressed at 0.04 MPa. Thus, a film-like molded body was obtained.

The produced film-like molded body was cut into a size measuring 25 mm by 12.5 mm. After that, the molded body was sandwiched between 2 aluminum plates (size: 25 mm×100 mm, thickness: 2 mm), and was heated at 180°C for 2 hours to be cured. Thus, a test piece for a shear strength evaluation was produced. The test piece was pulled with an Instron tester in a 180° direction in conformity with ASTN D1002, and the maximum load was evaluated as a shear strength and a tensile elongation.

A case in which the shear strength was 20 MPa or more was judged to be satisfactory, and a case in which the shear strength was less than 20 MPa was judged to be unsatisfactory. The result of the evaluation is shown in Table 2.

### (Elongation)

The film-like molded body obtained above was cut into a strip shape in accordance with JIS K6251 Dumbbell No. 7, and its elongation at break was measured by performing a tensile test with a small table-top tester ("EZ-LX" manufactured by Shimadzu Corporation) under the conditions of room temperature and 5.0 mm/min. The result of the elongation at break is shown in Table 2.

### (Heat Resistance)

Further, the produced film-like molded body was mounted on a polyethylene terephthalate film (PET film), and the resultant was heated at 180°C for 2 hours to produce a test piece for a glass transition temperature evaluation. The dynamic viscoelasticity of the test piece was measured with a dynamic viscoelasticity-measuring apparatus ("DMS7100" manufactured by Seiko Instruments Inc.) at a frequency of 1 Hz and a rate of temperature increase of 10°C/min, and the peak top of its Tanδ at the time of the measurement in the temperature range of from 23°C to 350°C was evaluated as its glass transition temperature.

A case in which the glass transition temperature was higher than that of Comparative Example 3 to be described later by 10°C or more was judged to be satisfactory, and a case in which the glass transition temperature was lower than that of Comparative Example 3 plus 10°C was judged to be unsatisfactory. The result of the evaluation is shown in Table 2.

### [Example 9]

### (Synthesis of Polymer P10)

9,9-Bis(4-hydroxy-3-methylphenyl)fluorene (BCFL) (15.1 g, 40.0 mmol), 4-t-butylcatechol (tBuCat) (6.6 g, 40.0 mmol), p-t-butylphenol (PTBP) serving as an end terminator (0.168 g, 1.1 mmol), sodium hydroxide (NaOH) serving as an alkali metal compound (6.8 g, 169.0 mmol), and tri-n-butylbenzyl ammonium chloride (TBBAC) serving as a phase-transfer catalyst (0.175 g, 0.56 mmol) were weighed in a four-necked separable flask including a stirring device, and ion-exchanged water (176 g) was added to the mixture. Thus, a diol monomer aqueous solution was prepared. Separately, a dicarboxylic acid halide monomer organic solution was prepared by dissolving terephthaloyl chloride (TPC) (8.2 g, 40.3 mmol) and isophthaloyl chloride (IPC) (8.2 g, 40.3 mmol) in toluene (154 mL). The dicarboxylic acid halide monomer organic solution was loaded into the diol monomer aqueous solution under strong stirring, and an interfacial polycondensation reaction was performed under room temperature over 3 hours. After the completion of the reaction, acetic acid was loaded to neutralize the remaining alkali metal compound. The resultant was left at rest to be separated into an aqueous phase and an organic phase, and then the aqueous phase was removed by decantation. The remaining organic phase was washed with ion-exchanged water equal in amount thereto; the operation was repeated three times. The organic phase after the washing was loaded into an excessive amount of methanol under strong stirring, and a precipitated solid was separated by filtration and recovered. After that, the recovered solid was dried with a vacuum dryer under reduced pressure at 120°C for 12 hours to provide a polymer P10 represented by the following formula (P-5) (yield: 31 g, percent yield: 95%).

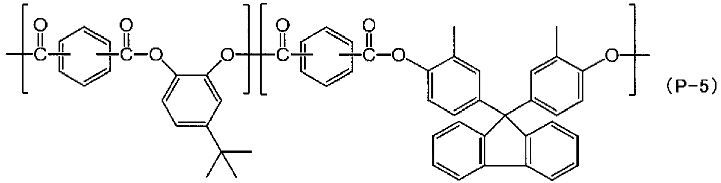

20 Parts of the produced polymer P10, 100 parts of a product available under the product name "jER 828" (manufactured by Mitsubishi Chemical Corporation, bisphenol A-type liquid epoxy resin, epoxy equivalent: 230 g/eq to 270 g/eq) serving as a curable compound, 5 parts of dicyandiamide, and 180 parts of methyl ethyl ketone were mixed in a paint shaker (using 2.5 mmϕ zirconia beads) to prepare a composition. Test pieces were produced by using the produced composition in the same manner as in Example 8, and were evaluated in the same manner as in Example 8. The results are shown in Table 2.

### [Example 10]

50 Parts of the polymer P10 produced in Example 9 described above, 100 parts of a product available under the product name "jER 828" (manufactured by Mitsubishi Chemical Corporation, bisphenol A-type liquid epoxy resin, epoxy equivalent: 230 g/eq to 270 g/eq) serving as a curable compound, 5 parts of dicyandiamide, and 225 parts of methyl ethyl ketone were mixed in a paint shaker (using 2.5 mmϕ zirconia beads) to prepare a composition. Test pieces were produced by using the produced composition in the same manner as in Example 8, and were evaluated in the same manner as in Example 8. The results are shown in Table 2.

### [Comparative Example 3]

100 Parts of a product available under the product name "jER 828" (manufactured by Mitsubishi Chemical Corporation, bisphenol A-type liquid epoxy resin, epoxy equivalent: 230 g/eq to 270 g/eq) serving as a curable compound, 5 parts of dicyandiamide, and 150 parts of methyl ethyl ketone were mixed in a paint shaker (using 2.5 mmϕ zirconia beads) to prepare a composition. Test pieces were produced by using the produced composition in the same manner as in Example 8, and were evaluated in the same manner as in Example 8. The results are shown in Table 2.

**Table 2**

| | | | Example 8 | Example 9 | Example 10 | Comparative Example 3 |
|---|---|---|---|---|---|---|
| Composition | Polymer | Kind | P1 | P10 | P10 | - |
| | | Part(s) by mass | 20 | 20 | 50 | - |
| | Curable compound | Kind | jER828 | jER828 | jER828 | jER828 |
| | | Part(s) by mass | 100 | 100 | 100 | 100 |
| | Dicyandiamide | Part(s) by mass | 5 | 5 | 5 | 5 |
| | Methyl ethyl ketone | Part(s) by mass | 180 | 180 | 225 | 150 |
| Evaluation result | Shear strength | MPa | 31 | 31 | 29 | 17 |
| | Elongation | % | 21 | 21 | 17 | 10 |
| | Heat resistance (tanδ) | °C | 179 | 175 | 189 | 157 |

As is apparent from Table 2, it was able to be confirmed that each of the cured products produced from the compositions of Examples 8 to 10 had a shear strength of 20 MPa or more, showed an elongation of 17% or more, and had satisfactory heat resistance. Meanwhile, it was able to be confirmed that the cured product produced from the composition of Comparative Example 3 was inferior in all the evaluation items to the cured products produced from the compositions of Examples 8 to 10. It is understood from the foregoing results that according to a composition containing the polymer of the present invention and a curable compound, a molded body that is excellent in shear strength and elongation, and has satisfactory heat resistance can be produced.

### [Example 11]

### (Synthesis of Polymer P11)

TMC (62.1 g, 200.0 mmol), 4,6-dichloropyrimidine (Pym) (30.5 g, 204.9 mmol), and potassium carbonate (37.3 g, 270.0 mmol) were weighed in a four-necked separable flask including a stirring device. N-Methyl-2-pyrrolidone (214 g) was added to the mixture, and the whole was subjected to a reaction under a nitrogen atmosphere at 130°C for 6 hours. After the completion of the reaction, N-methyl-2-pyrrolidone (300 g) was added to dilute the resultant, and a salt was removed by filtration. After that, the remaining solution was loaded into methanol (10 kg). A precipitated solid was separated by filtration and washed with a small amount of methanol. The solid was separated by filtration again and recovered, and was then dried with a vacuum dryer under reduced pressure at 120°C for 12 hours to provide a polymer P11 represented by the following formula (P-6) (yield; 69.9 g, percent yield; 90%, weight-average molecular weight (Mw); 69,000). The absence of a OH group at an end of the polymer was confirmed by ¹³C-NMR.

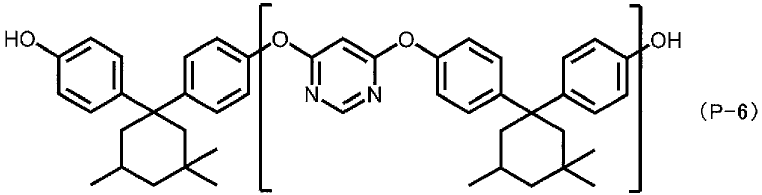

15 Parts of the polymer P1 produced in Example 1 described above, 70 parts of the polymer P11 produced above, 30 parts of a polyglycidyl ether of a dicyclopentadiene-phenol polymer (manufactured by Nippon Kayaku Co., Ltd., product name "XD-1000") serving as a curable compound, 1.5 parts of 1-benzyl-2-methylimidazole (product name "BMI 12", manufactured by Mitsubishi Chemical Corporation) serving as a curing aid, and 370 parts of cyclopentanone were mixed to prepare a composition.

### (Chemical Resistance)

The produced composition was applied onto a base material (1/4 cut of a 4-inch wafer) with a spin coater (MIKASA Spincoater 1H-D7), and the solvent was dried at 70°C for 15 minutes and at 120°C for 15 minutes. The residue was cured with a baking oven (ESPEC SSPH-101M) under nitrogen at 150°C for 30 minutes and at 200°C for 180 minutes to produce a test piece for an evaluation (having a thickness of from 10 µm to 20 µm). The 1/4 cut sample of the 4-inch wafer onto which the composition had already been applied and dried was immersed in 50 ml of toluene at room temperature for 10 minutes together with the base material, and then the cured film was dried under the following conditions: at 120°C in a vacuum for 3 hours. Then, a residual ratio (%) was calculated from the expression "(weight of base material having applied thereto cured product after immersion and drying-weight of base material)/(weight of base material having applied thereto cured product before immersion-weight of base material)×100." A case in which the residual ratio was 90% or more was judged to be satisfactory and indicated by Symbol "○", and a case in which the residual ratio was less than 90% was judged to be unsatisfactory and indicated by Symbol "×". The result is shown in Table 3.

### (Coefficient of Linear Expansion (CTE))

The composition was applied in a film shape onto a PET film, and was then heated in air at 70°C for 15 minutes and at 120°C for 15 minutes. The composition was peeled from the PET film, and the resultant film body was further subjected to a heat treatment in air at from 200°C to 250°C for 3 hours to provide a film for an evaluation. The coefficient of linear expansion of the produced film for an evaluation was measured with a TMA measuring apparatus MODEL SSC-5200 manufactured by Seiko Instruments Inc. At this time, the coefficient of linear expansion was calculated from the gradient of a TMA curve in the range of from 100°C to 150°C at the time of an increase in temperature of the film for an evaluation to a temperature lower than its glass transition temperature by 20°C at 5°C/min. The result is shown in Table 3.

### (Elastic Modulus and Elongation)

The film for an evaluation obtained above was cut into a strip shape in accordance with JIS K6251 Dumbbell No. 7, and its elastic modulus and elongation at break were measured by performing a tensile test with a small table-top tester ("EZ-LX" manufactured by Shimadzu Corporation) under the conditions of room temperature and 5.0 mm/min. A case in which the elastic modulus is 3 GPa or more is judged to be satisfactory. The results of the elastic modulus and the elongation at break are shown in Table 3.

### [Example 12]

15 Parts of the polymer P2 produced in Example 2 described above, 70 parts of the polymer P11 produced in Example 11 described above, 30 parts of a polyglycidyl ether of a dicyclopentadiene-phenol polymer (manufactured by Nippon Kayaku Co., Ltd., product name "XD-1000") serving as a curable compound, 1.5 parts of 1-benzyl-2-methylimidazole (product name "BMI 12", manufactured by Mitsubishi Chemical Corporation) serving as a curing aid, and 370 parts of a solvent (cyclopentanone) were mixed to prepare a composition. Test pieces were produced by using the produced composition in the same manner as in Example 11, and were evaluated in the same manner as in Example 11. The results are shown in Table 3.

### [Example 13]

### (Synthesis of Polymer P12)

1,1-Bis(4-hydroxyphenyl)-3,3,5-trimethylcyclohexane (TMC) (8.7 g, 28.0 mmol), 4-t-butylcatechol (tBuCat) (4.7 g, 28.0 mmol), sodium hydroxide (NaOH) serving as an alkali metal compound (4.7 g, 118.0 mmol), and tri-n-butylbenzyl ammonium chloride (TBBAC) serving as a phase-transfer catalyst (0.122 g, 0.39 mmol) were weighed in a four-necked separable flask including a stirring device, and ion-exchanged water (240 g) was added to the mixture. Thus, a diol monomer aqueous solution was prepared. Separately, a dicarboxylic acid halide monomer organic solution was prepared by dissolving terephthaloyl chloride (TPC) (5.7 g, 28.0 mmol) and isophthaloyl chloride (IPC) (5.7 g, 28.0 mmol) in toluene (228 mL). The dicarboxylic acid halide monomer organic solution was loaded into the diol monomer aqueous solution under strong stirring, and an interfacial polycondensation reaction was performed under room temperature over 3 hours. After the completion of the reaction, acetic acid was loaded to neutralize the remaining alkali metal compound. The resultant was left at rest to be separated into an aqueous phase and an organic phase, and then the aqueous phase was removed by decantation. The remaining organic phase was washed with ion-exchanged water equal in amount thereto; the operation was repeated three times. The organic phase after the washing was loaded into an excessive amount of methanol under strong stirring, and a precipitated solid was separated by filtration and recovered. After that, the recovered solid was dried with a vacuum dryer under reduced pressure at 120°C for 12 hours to provide a polymer P12 represented by the following formula (P-7) (yield: 19 g, percent yield: 90%).

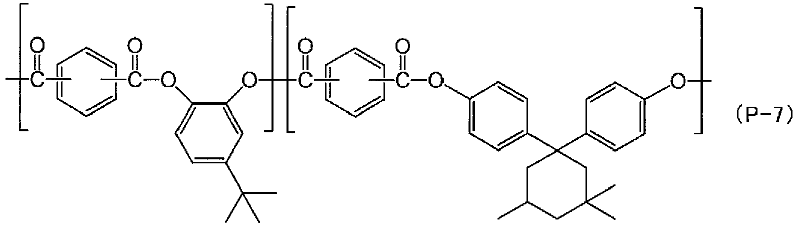

70 Parts of the polymer P11 produced in Example 11 described above, 15 parts of the produced polymer P12, 30 parts of a polyglycidyl ether of a dicyclopentadiene-phenol polymer (manufactured by Nippon Kayaku Co., Ltd., product name "XD-1000") serving as a curable compound, 1.5 parts of 1-benzyl-2-methylimidazole (product name "BMI 12", manufactured by Mitsubishi Chemical Corporation) serving as a curing aid, and 370 parts of cyclopentanone were mixed to prepare a composition. Test pieces were produced by using the produced composition in the same manner as in Example 11, and were evaluated in the same manner as in Example 11. The results are shown in Table 3.

### [Comparative Example 4]

100 Parts by mass of the polymer P11 produced in Example 11 described above and 300 parts by mass of cyclopentanone were mixed to prepare a composition. Test pieces were produced by using the produced composition in the same manner as in Example 11, and were evaluated in the same manner as in Example 11. The results are shown in Table 3.

### [Comparative Example 5]

30 Parts of a polyglycidyl ether of a dicyclopentadiene-phenol polymer (manufactured by Nippon Kayaku Co., Ltd., product name "XD-1000") serving as a curable compound, 1.5 parts of 1-benzyl-2-methylimidazole (product name "BMI 12", manufactured by Mitsubishi Chemical Corporation) serving as a curing aid, and 100 parts of cyclopentanone were mixed to prepare a composition. Test pieces were produced by using the produced composition in the same manner as in Example 11, and were evaluated in the same manner as in Example 11. The results are shown in Table 3.

**Table 3**

| | | | Example 11 | Example 12 | Example 13 | Comparative Example 4 | Comparative Example 5 |
|---|---|---|---|---|---|---|---|
| Composition | Polymer | Kind | P1 | P2 | P12 | - | - |
| | | Part(s) by mass | 15 | 15 | 15 | - | - |
| | | Kind | P11 | P11 | P11 | P11 | - |
| | | Part(s) by mass | 70 | 70 | 70 | 100 | - |
| | Curable compound | Kind | Polyglycidyl ether of dicyclopentadiene-phenol polymer | Polyglycidyl ether of dicyclopentadiene-phenol polymer | Polyglycidyl ether of dicyclopentadiene-phenol polymer | - | Polyglycidyl ether of dicyclopentadiene-phenol polymer |
| | | Part(s) by mass | 30 | 30 | 30 | - | 30 |
| | Curing aid | Kind | 1 -Benzyl-2-methylimidazole | 1-Benzyl-2-methylimidazole | 1 -Benzyl-2-methylimidazole | - | 1-Benzyl-2-methylimidazole |
| | | Part(s) by mass | 1.5 | 1.5 | 1.5 | - | 1.5 |
| | Cyclopentanone | Part(s) by mass | 370 | 370 | 370 | 300 | 100 |
| Evaluation result | Chemical resistance | | ○ | ○ | ○ | × | ○ |
| | Coefficient of linear expansion (CTE) | mmp/K | 45 | 45 | 44 | 54 | 52 |
| | Elastic modulus | Gpa | 3.3 | 3.2 | 3.3 | 2.9 | 2.9 |
| | Elongation | % | 20 | 23 | 17 | 34 | 10 |

As is apparent from Table 3, it was able to be confirmed that each of the cured products produced from the compositions of Examples 11 to 13 had an elastic modulus of 3.0 GPa or more, showed an elongation of 17% or more, and had satisfactory chemical resistance and a satisfactory coefficient of linear expansion. Meanwhile, it was able to be confirmed that the cured product produced from the composition of Comparative Example 4 was inferior in chemical resistance and elastic modulus to the cured products produced from the compositions of Examples 11 to 13. In addition, it was able to be confirmed that the molded body produced from the cured product of Comparative Example 5 was inferior in elastic modulus to the cured products produced from the compositions of Examples 11 to 13. It is understood from the foregoing results that according to a composition containing two kinds of polymer of the present invention and a curable compound, a cured product that is excellent in coefficient of linear expansion, elongation, and elastic modulus, and has satisfactory chemical resistance can be produced.

### Industrial Applicability

The novel polymer in the present invention is excellent in solubility in various organic solvents, has a high glass transition temperature, is excellent in heat resistance, and has excellent mechanical characteristics (an excellent elastic modulus and an excellent tensile elongation). Accordingly, the polymer of the present invention, and the composition and the molded body each including the polymer can be suitably utilized in, for example, the field of electrical and electronic materials to be used in electrical and electronic industry, and optical industry, and the field of optical materials. In particular, the polymer, the composition, and the molded body can be suitably utilized in, for example, optical parts (e.g., optical films, such as a wavelength plate and a phase difference plate, various special lenses, such as a conical lens, a spherical lens, and a cylindrical lens, and lens arrays), insulating films for printed wiring boards, sealing materials for electrical and electronic parts, interlayer insulating films, heat-resistant protective films, laminated plates (e.g., a printed wiring board, an interlayer adhesive, solder resist, and solder paste), adhesives (e.g., a conductive adhesive and a thermally conductive adhesive/adhesive sheet), and various coatings.

## Claims

1. A polymer, comprising:
a first structural unit represented by the following formula (1);
a second structural unit represented by at least one of the following formulae (2-1) and (2-2); and
a third structural unit represented by at least one of the following formulae (3-1) and (3-2): 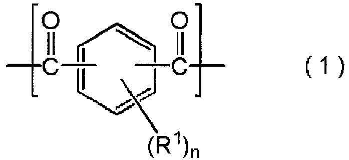 in the formula (1), R¹ represents a halogen atom, a monovalent hydrocarbon group having 1 to 20 carbon atoms, a monovalent halogenated hydrocarbon group having 1 to 20 carbon atoms, a nitro group, or a cyano group, and "n" represents an integer of from 0 to 4, and when "n" represents 2 or more, a plurality of R¹s may be identical to or different from each other, or may be bonded to each other in an arbitrary combination to form part of a ring structure; 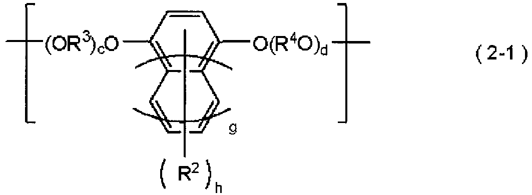 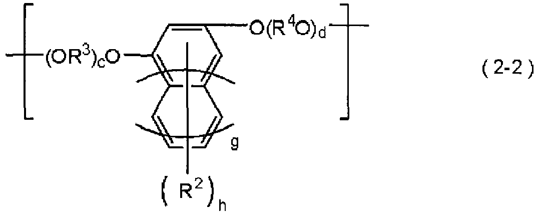 in the formulae (2-1) and (2-2), R²s each independently represent a halogen atom, a monovalent hydrocarbon group having 1 to 20 carbon atoms, a monovalent halogenated hydrocarbon group having 1 to 20 carbon atoms, a nitro group, or a cyano group, "g"s each independently represent an integer of from 0 to 2, "h"s each independently represent an integer of from 1 to 8, and when "h" represents 2 or more, a plurality of R²s may be identical to or different from each other, or may be bonded to each other in an arbitrary combination to form part of a ring structure, R³s each independently represent a methylene group or an alkylene group having 2 to 4 carbon atoms, "c" represents an integer of from 0 to 2, and when "c" represents 2, two R³s may be identical to or different from each other, R⁴s each independently represent a methylene group or an alkylene group having 2 to 4 carbon atoms, and "d" represents an integer of from 0 to 2, and when "d" represents 2, two R⁴s may be identical to or different from each other; 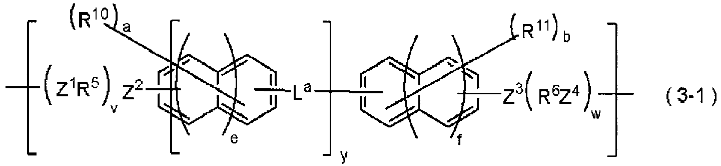 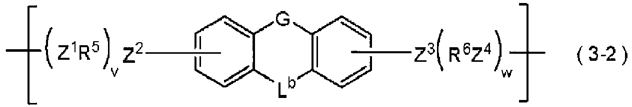 in the formulae (3-1) and (3-2), R¹⁰ and R¹¹ each independently represent a halogen atom, a monovalent hydrocarbon group having 1 to 20 carbon atoms, a monovalent halogenated hydrocarbon group having 1 to 20 carbon atoms, a nitro group, or a cyano group, "e" and "f' each independently represent an integer of from 0 to 2, "a" and "b" each independently represent an integer of from 0 to 8, when "a" represents 2 or more, a plurality of R¹⁰s may be identical to or different from each other, or may be bonded to each other in an arbitrary combination to form part of a ring structure, and when "b" represents 2 or more, a plurality of R¹¹s may be identical to or different from each other, or may be bonded to each other in an arbitrary combination to form part of a ring structure, Z¹ to Z⁴ each independently represent -O- or -S-, R⁵ and R⁶ each independently represent a methylene group or an alkylene group having 2 to 4 carbon atoms, "v" represents an integer of from 0 to 2, and when "v" represents 2, two R⁵s may be identical to or different from each other, and two Z¹s may be identical to or different from each other, "w" represents an integer of from 0 to 2, and when "w" represents 2, two R⁶s may be identical to or different from each other, and two Z⁴s may be identical to or different from each other, L^{a} represents a divalent group represented by the following formula (L-1), (L-2), (L-3-1), or (L-3-2), "y" represents an integer of from 1 to 3, when "y" represents 2 or more, a plurality of L^{a}s may be identical to or different from each other, and when "y" represents 2 or more, and "a" represents 1 or more, a plurality of R¹⁰s may be identical to or different from each other, L^{b} represents a divalent group represented by the following formula (L-3-1) or (L-3-2), and G represents -O-, -S-, -C=O-, -SO-, or -SO₂-; 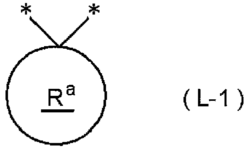 in the formula (L-1), R^{a} represents a divalent alicyclic hydrocarbon group having 5 to 30 ring members, or a divalent fluorinated alicyclic hydrocarbon group having 5 to 30 ring members, and "*" represents a bonding site; 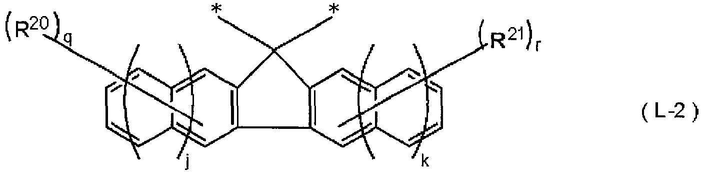 in the formula (L-2), R²⁰ and R²¹ each independently represent a halogen atom, a monovalent hydrocarbon group having 1 to 20 carbon atoms, a monovalent halogenated hydrocarbon group having 1 to 20 carbon atoms, a nitro group, or a cyano group, "j" and "k" each independently represent an integer of from 0 to 2, "q" and "r" each independently represent an integer of from 0 to 8, when "q" represents 2 or more, a plurality of R²⁰s may be identical to or different from each other, or may be bonded to each other in an arbitrary combination to form part of a ring structure, and when "r" represents 2 or more, a plurality of R²¹s may be identical to or different from each other, or may be bonded to each other in an arbitrary combination to form part of a ring structure, and "*" represents a bonding site; 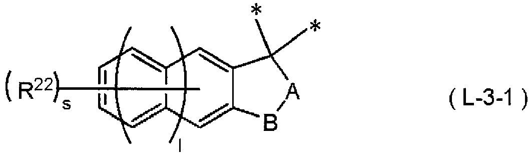 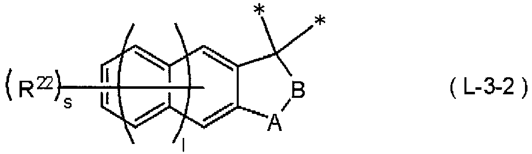 in the formulae (L-3-1) and (L-3-2), As each independently represent -CO-, -SO-, or -SO₂-, Bs each independently represent -O-, -S-, or -N(R³⁰)-, R³⁰ represents a hydrogen atom, a halogen atom, a monovalent hydrocarbon group having 1 to 20 carbon atoms, or a monovalent halogenated hydrocarbon group having 1 to 20 carbon atoms, R²²s each independently represent a halogen atom, a monovalent hydrocarbon group having 1 to 20 carbon atoms, a monovalent halogenated hydrocarbon group having 1 to 20 carbon atoms, a nitro group, or a cyano group, "l"s each independently represent an integer of from 0 to 2, "s"s each independently represent an integer of from 0 to 8, and when "s" represents 2 or more, a plurality of R²²s may be identical to or different from each other, or may be bonded to each other in an arbitrary combination to form part of a ring structure, and "*" represents a bonding site.

2. A polymer according to claim 1,
wherein the polymer comprises a unit represented by the formula (3-1) as the third structural unit,
wherein L^{a} in the formula (3-1) represents a divalent group represented by the formula (L-1), and
wherein R^{a} in the formula (L-1) represents a monocyclic alicyclic hydrocarbon group having 5 to 15 ring members, or a monocyclic fluorinated alicyclic hydrocarbon group having 5 to 15 ring members.

3. A polymer according to claim 1,
wherein the polymer comprises a unit represented by the formula (3-1) as the third structural unit,
wherein L^{a} in the formula (3-1) represents a divalent group represented by the formula (L-1), and
wherein R^{a} in the formula (L-1) represents a polycyclic alicyclic hydrocarbon group having 7 to 30 ring members, or a polycyclic fluorinated alicyclic hydrocarbon group having 7 to 30 ring members.

4. A polymer according to any one of claims 1 to 3, wherein the polymer has a weight-average molecular weight in terms of polystyrene of 500 or more and 400,000 or less.

5. A composition, comprising:
the polymer of any one of claims 1 to 4; and
an organic solvent.

6. A molded body, comprising the polymer of any one of claims 1 to 4.

7. A composition, comprising:
a polymer including a first structural unit represented by the following formula (1), a second structural unit represented by the following formula (2), and a third structural unit represented by at least one of the following formulae (3-1) and (3-2); and
a curable compound: 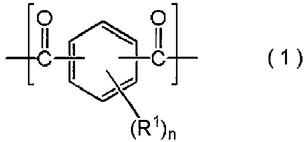 in the formula (1), R¹ represents a halogen atom, a monovalent hydrocarbon group having 1 to 20 carbon atoms, a monovalent halogenated hydrocarbon group having 1 to 20 carbon atoms, a nitro group, or a cyano group, and "n" represents an integer of from 0 to 4, and when "n" represents 2 or more, a plurality of R¹s may be identical to or different from each other, or may be bonded to each other in an arbitrary combination to form part of a ring structure; 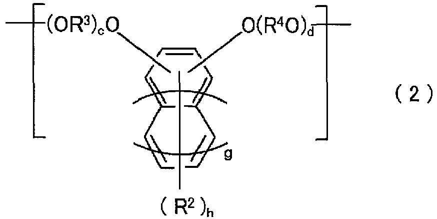 in the formula (2), R² represents a halogen atom, a monovalent hydrocarbon group having 1 to 20 carbon atoms, a monovalent halogenated hydrocarbon group having 1 to 20 carbon atoms, a nitro group, or a cyano group, "g" represents an integer of from 0 to 2, "h" represents an integer of from 0 to 8, and when "h" represents 2 or more, a plurality of R²s may be identical to or different from each other, or may be bonded to each other in an arbitrary combination to form part of a ring structure, R³ represents a methylene group or an alkylene group having 2 to 4 carbon atoms, "c" represents an integer of from 0 to 2, and when "c" represents 2, two R³s may be identical to or different from each other, R⁴ represents a methylene group or an alkylene group having 2 to 4 carbon atoms, and "d" represents an integer of from 0 to 2, and when "d" represents 2, two R⁴s may be identical to or different from each other; 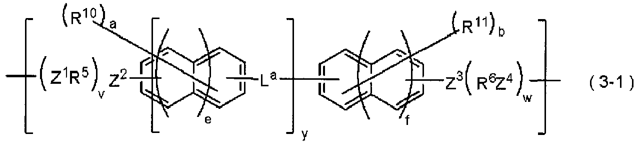 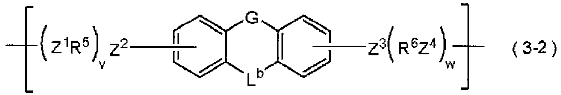 in the formulae (3-1) and (3-2), R¹⁰ and R¹¹ each independently represent a halogen atom, a monovalent hydrocarbon group having 1 to 20 carbon atoms, a monovalent halogenated hydrocarbon group having 1 to 20 carbon atoms, a nitro group, or a cyano group, "e" and "f' each independently represent an integer of from 0 to 2, "a" and "b" each independently represent an integer of from 0 to 8, when "a" represents 2 or more, a plurality of R¹⁰s may be identical to or different from each other, or may be bonded to each other in an arbitrary combination to form part of a ring structure, and when "b" represents 2 or more, a plurality of R¹¹s may be identical to or different from each other, or may be bonded to each other in an arbitrary combination to form part of a ring structure, Z¹ to Z⁴ each independently represent -O- or -S-, R⁵ and R⁶ each independently represent a methylene group or an alkylene group having 2 to 4 carbon atoms, "v" represents an integer of from 0 to 2, and when "v" represents 2, two R⁵s may be identical to or different from each other, and two Z¹s may be identical to or different from each other, "w" represents an integer of from 0 to 2, and when "w" represents 2, two R⁶s may be identical to or different from each other, and two Z⁴s may be identical to or different from each other, L^{a} represents a divalent group represented by the following formula (L-1), (L-2), (L-3-1), or (L-3-2), "y" represents an integer of from 1 to 3, when "y" represents 2 or more, a plurality of L^{a}s may be identical to or different from each other, and when "y" represents 2 or more, and "a" represents 1 or more, a plurality of R¹⁰s may be identical to or different from each other, L^{b} represents a divalent group represented by the following formula (L-3-1) or (L-3-2), and G represents -O-, -S-, -C=O-, -SO-, or -SO₂-; 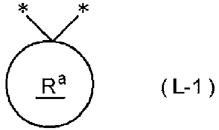 in the formula (L-1), R^{a} represents a divalent alicyclic hydrocarbon group having 5 to 30 ring members, or a divalent fluorinated alicyclic hydrocarbon group having 5 to 30 ring members, and "*" represents a bonding site; 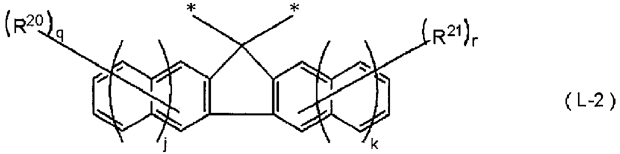 in the formula (L-2), R²⁰ and R²¹ each independently represent a halogen atom, a monovalent hydrocarbon group having 1 to 20 carbon atoms, a monovalent halogenated hydrocarbon group having 1 to 20 carbon atoms, a nitro group, or a cyano group, "j" and "k" each independently represent an integer of from 0 to 2, "q" and "r" each independently represent an integer of from 0 to 8, when "q" represents 2 or more, a plurality of R²⁰s may be identical to or different from each other, or may be bonded to each other in an arbitrary combination to form part of a ring structure, and when "r" represents 2 or more, a plurality of R²¹s may be identical to or different from each other, or may be bonded to each other in an arbitrary combination to form part of a ring structure, and "*" represents a bonding site; 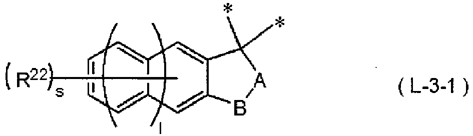 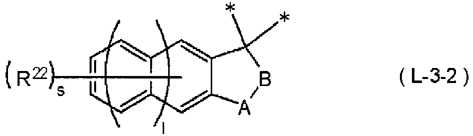 in the formulae (L-3-1) and (L-3-2), As each independently represent -CO-, -SO-, or -SO₂-, Bs each independently represent -O-, -S-, or -N(R³⁰)-, R³⁰ represents a hydrogen atom, a halogen atom, a monovalent hydrocarbon group having 1 to 20 carbon atoms, or a monovalent halogenated hydrocarbon group having 1 to 20 carbon atoms, R²²s each independently represent a halogen atom, a monovalent hydrocarbon group having 1 to 20 carbon atoms, a monovalent halogenated hydrocarbon group having 1 to 20 carbon atoms, a nitro group, or a cyano group, "l"s each independently represent an integer of from 0 to 2, "s"s each independently represent an integer of from 0 to 8, and when "s" represents 2 or more, a plurality of R²²s may be identical to or different from each other, or may be bonded to each other in an arbitrary combination to form part of a ring structure, and "*" represents a bonding site.

8. A composition according to claim 7, wherein the curable compound comprises at least one kind of an epoxy compound, a cyanate ester compound, a vinyl compound, a silicone compound, an oxazine compound, a maleimide compound, and an allyl compound.

9. A composition according to claim 7 or 8, further comprising a curing aid.

10. A cured product, which is obtained by curing the composition of any one of claims 7 to 9.

11. A laminate, comprising:
a substrate; and
a cured product layer produced on the substrate by using the composition of any one of claims 7 to 9.
